# EUROPEAN PATENT SPECIFICATION

(11) **EP 1 635 260 B1**
(45) Date of publication and mention of the grant of the patent: **29.08.2007**
(21) Application number: 05254770.0
(22) Date of filing: 29.07.2005
(51) Int. Cl.: G06F 9/46

(54) **Path selection for function pipelining in grid computing**
Auswahl eines Pfads für Pipeline-Verarbeitung in einer Grid-Umgebung
Sélection d'un chemin pour un procédé de traitement pipeline dans un système de calcul de grille

(30) Priority: 08.09.2004 JP 2004261295
(43) Date of publication of application: 15.03.2006
(73) Proprietor: Sony Corporation, Tokyo 141 (JP)
(72) Inventor: Hirose, Yukiyoshi c/o Sony Corporation, Tokyo 141 (JP)
(74) Representative: Horner, David Richard

(56) References cited:
- ALLEN G ET AL: "The Cactus Worm: experiments with dynamic resource discovery and allocation in a grid environment" INTERNATIONAL JOURNAL OF HIGH PERFORMANCE COMPUTING APPLICATIONS, SAGE SCIENCE PRESS, THOUSAND OAKS, US, vol. 15, no. 4, 2001, pages 345-358, XP002308620 ISSN: 1094-3420
- AL-RAWI G ET AL: "Optimizing iterative decoding of low-density parity check codes on programmable pipelined parallel architectures" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY : IEEE, US, vol. VOL. 5 OF 6, 25 November 2001 (2001-11-25), pages 3012-3018, XP010747546 ISBN: 0-7803-7206-9

## Description

### BACKGROUND OF THE INVENTION

### Field of the Invention

The present invention relates to a system, apparatus, method, and computer program for processing information and, in particular, to a system, apparatus, method, and computer program for executing a function pipeline process.

### Description of the Related Art

Grid computing is currently drawing attention. Grid computing is a technique that achieves high computing performance by causing a plurality of information processing apparatuses connected to a network to operate in cooperation. Such techniques are disclosed in Japanese Unexamined Patent Application Publication Nos. 2002-342165, 2002-351850, 2002-358289, 2002-366533, and 2002-366534, for example.

The inventors of this invention have thought that this technique allows a plurality of information processing apparatuses to perform a function pipeline process.

The function pipeline process is performed as below. A plurality of function blocks execute predetermined processes on data of one unit independent of each other in a predetermined process sequence. Each time the data of one unit is input to a first function block of the plurality of function blocks, the processes of the plurality of function blocks are successively performed on the data. The process of each function block is also referred to as a task.

The following problems arise if the above-quoted techniques are used singly or in combination.

If one or a combination of the techniques is used, the path of the function pipeline process is fixed. The path refers to a data transmission path that is virtually arranged and formed in a process sequence if the function pipeline process is carried out by a plurality of information processing apparatuses.

The function pipeline process is not always the fastest on the fixed path depending on a load factor of processors in the plurality of information processing apparatuses and limitations on bands of a network.

If any trouble occurs in one information processing apparatus contained in the fixed path over the network, the execution of the function pipeline process on information processing apparatuses subsequent to the one information processing apparatus becomes impossible.

### SUMMARY OF THE INVENTION

Embodiments of the present invention enable execution and control of the function pipeline process making use of the fastest path from among available paths.

An information processing system of one embodiment of the present invention includes at least three information processing apparatuses. In order to perform a function pipeline process in response to the inputting of data of each one unit so that processes of a plurality of functional blocks are successively performed on the data in a first sequence, the system sets a path in which each of at least two of information processing apparatuses is virtually arranged in a second sequence, performs first control for assigning a processor, available for each of at least two of the information processing apparatuses contained in the path, at least one of the processes of the plurality of function blocks in accordance with the first sequence and the second sequence, and then performs second control for causing the data to successively pass through the path on a per unit basis. One of at least three information processing apparatuses includes a candidate setting unit for setting at least two path candidates based on the number of processors available for each one of at least three information processing apparatuses, a first control unit for performing the first control and the second control using individually at least two path candidates set by the candidate setting unit, a path setting unit for setting, as the path from among at least two path candidates set by the candidate setting unit, a path candidate through which the data of one unit has passed the fastest through the second control of the first control unit, and a second control unit for performing the second control by using the path after the path is set by the path setting unit.

In accordance with one embodiment of the present invention, an information processing method of an information processing system including at least three information processing apparatuses is provided. In order to perform a function pipeline process in response to the inputting of data of each one unit so that processes of a plurality of functional blocks are successively performed on the data in a first sequence, the system sets a path in which each of at least two of information processing apparatuses is virtually arranged in a second sequence, performs first control for assigning a processor, available for each of at least two of the information processing apparatuses contained in the path, at least one of the processes of the plurality of function blocks in accordance with the first sequence and the second sequence, and then performs second control for causing the data to successively pass through the path on a per unit basis. The information processing method includes steps of setting at least two path candidates based on the number of processors available for each one of at least three information processing apparatuses, performing the first control and the second control using individually at least two set path candidates, setting, as the path from among at least two set path candidates, a path candidate through which the data of one unit has passed the fastest through the second control, and performing the second control by using the path after the path is set.

In the information processing system and the information processing method of embodiments of the present invention, the function pipeline process is performed. Each time the predetermined data of one unit is input, the processes of the plurality of function blocks are performed on the data in the first sequence. More specifically, the information processing system sets the path in which each of at least two of information processing apparatuses is virtually arranged in a second sequence, performs the first control for assigning a processor, available for each of at least two of the information processing apparatuses contained in the path, at least one of the processes of the plurality of function blocks in accordance with the first sequence and the second sequence, and then performs the second control for causing the data to successively pass through the path on a per unit basis. In this way, the image processing system performs the function pipeline process. More specifically, at least two path candidates are set based on the number of processors available for each one of at least three information processing apparatuses. The first control and the second control are performed using individually at least two path candidates set by the candidate setting unit in order to execute the function pipeline process. A candidate through which the data of one unit has passed the fastest through the second control is set as the path from among at least two set path candidates. The second control is performed using the set path.

In accordance with one embodiment of the present invention, one of at least three information processing apparatuses included in an information processing system is provided. In order to perform a function pipeline process in response to the inputting of data of each one unit so that processes of a plurality of functional blocks are successively performed on the data in a first sequence, the system sets a path in which each of at least two of information processing apparatuses is virtually arranged in a second sequence, performs first control for assigning a processor, available for each of at least two of the information processing apparatuses contained in the path, at least one of the processes of the plurality of function blocks in accordance with the first sequence and the second sequence, and then performs second control for causing the data to successively pass through the path on a per unit basis. One of at least three information processing apparatuses includes a candidate setting unit for setting at least two path candidates based on the number of processors available for each one of at least three information processing apparatuses, a first control unit for performing the first control and the second control using individually at least two path candidates set by the candidate setting unit, a path setting unit for setting, as the path from among at least two path candidates set by the candidate setting unit, a path candidate through which the data of one unit has passed the fastest through the second control of the first control unit, and a second control unit for performing the second control by using the path after the path is set by the path setting unit.

In the information processing apparatus, the path setting unit resets a path from among at least two candidates not yet set as the path if a predetermined condition is satisfied, and the second control unit performs the second control using the reset path after the path is reset by the path setting unit.

In accordance with one embodiment of the present invention, an information processing method of one of at least three information processing apparatuses included in an information processing system is provided. In order to perform a function pipeline process in response to the inputting of data of each one unit so that processes of a plurality of functional blocks are successively performed on the data in a first sequence, the system sets a path in which each of at least two of information processing apparatuses is virtually arranged in a second sequence, performs first control for assigning a processor, available for each of at least two of the information processing apparatuses contained in the path, at least one of the processes of the plurality of function blocks in accordance with the first sequence and the second sequence, and then performs second control for causing the data to successively pass through the path on a per unit basis. The information processing method includes steps of setting at least two path candidates based on the number of processors available for each one of at least three information processing apparatuses, performing the first control and the second control using individually at least two set path candidates, setting, as the path from among at least two set path candidates, a path candidate through which the data of one unit has passed the fastest through the second control, and performing the second control by using the path after the path is set.

In accordance with one embodiment of the present invention, a computer program for causing a computer to perform an information processing method of one of at least three information processing apparatuses included in an information processing system is provided. In order to perform a function pipeline process in response to the inputting of data of each one unit so that processes of a plurality of functional blocks are successively performed on the data in a first sequence, the system sets a path in which each of at least two of information processing apparatuses is virtually arranged in a second sequence, performs first control for assigning a processor, available for each of at least two of the information processing apparatuses contained in the path, at least one of the processes of the plurality of function blocks in accordance with the first sequence and the second sequence, and then performs second control for causing the data to successively pass through the path on a per unit basis. The computer program includes steps of setting at least two path candidates based on the number of processors available for each one of at least three information processing apparatuses, performing the first control and the second control using individually at least two set path candidates, setting, as the path from among at least two set path candidates, a path candidate through which the data of one unit has passed the fastest through the second control, and performing the second control by using the path after the path is set.

In the information processing apparatus, the information processing method, and the computer program of the embodiments of the present invention, the function pipeline process is performed. Each time the predetermined data of one unit is input, the processes of the plurality of function blocks are performed on the data in the first sequence. More specifically, the information processing system sets the path in which each of at least two of information processing apparatuses is virtually arranged in a second sequence, performs the first control for assigning a processor, available for each of at least two of the information processing apparatuses contained in the path, at least one of the processes of the plurality of function blocks in accordance with the first sequence and the second sequence, and then performs the second control for causing the data to successively pass through the path on a per unit basis. In this way, the image processing system performs the function pipeline process. More specifically, at least two path candidates are set based on the number of processors available for each one of at least three information processing apparatuses. The first control and the second control are performed using individually at least two path candidates set by the candidate setting unit in order to execute the function pipeline process. A candidate through which the data of one unit has passed the fastest through the second control is set as the path from among at least two set path candidates. The second control is performed using the set path.

In accordance with embodiments of the present invention, the function pipeline process is performed using a predetermined path containing the plurality of information processing apparatuses. The function pipeline process is executed and controlled using the fastest path from among available paths.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a block diagram of an information processing system composed of information processing apparatuses in accordance with one embodiment of the present invention;
Fig. 2 illustrates a memory of the information processing apparatus of Fig. 1;
Fig. 3 illustrates a local storage of a sub-processor in the information processing apparatus of Fig. 1;
Fig. 4 illustrates a key management table;
Fig. 5 illustrate a software cell;
Fig. 6 illustrates a data area of the software cell with a DMA command being a status reply command;
Fig. 7 illustrates the information processing system of Fig. 1 functioning as a single virtual information processing apparatus;
Fig. 8 illustrates a software structure of the information processing apparatus;
Fig. 9 illustrates the example of a process sub-processor management table;
Fig. 10 illustrates a single virtual information processing apparatus of Fig. 7 performing a predetermined function program;
Fig. 11 is a flowchart of a process flow of the predetermined function program performed by the single virtual information processing apparatus of Fig. 7;
Fig. 12 illustrates a function pipeline process composed of 10 tasks;
Fig. 13 illustrates the function pipeline process of Fig. 12 performed by two information processing apparatuses;
Fig. 14 is a flowchart of the process flow of the function pipeline process performed by the single virtual information processing apparatus of Fig. 7;
Fig. 15 is a functional block diagram of the single virtual information processing apparatus of Fig. 7 with one member information processing apparatus functioning as a process execution requesting apparatus;
Fig. 16 illustrates a unused sub-processor list;
Fig. 17 illustrates a path selection table;
Fig. 18 is a flowchart illustrating a path selection process of processes of Fig. 14;
Fig. 19 illustrates a bifurcated tree built in the path selection process of Fig. 18;
Fig. 20 illustrates a path candidate search process of the path selection processes of Fig. 18;
Fig. 21 illustrates a path candidate determined in the path candidate search process of Fig. 20;
Fig. 22 illustrates a path selection table, including a path candidate determined in the path candidate search process of Fig. 20, as opposed in the path selection table of Fig. 17;
Fig. 23 illustrates the function pipeline process composed of 14 tasks;
Fig. 24 illustrates an unused sub-processor when the function pipeline process of Fig. 23 is performed in a manner of Fig. 14;
Fig. 25 illustrates a path selection table of the function pipeline process of Fig. 23 performed in the manner of Fig. 14;
Fig. 26 illustrates a bifurcated tree built in the path selection process of Fig. 18 when the function pipeline process of Fig. 23 is performed in the manner of Fig. 14;
Fig. 27 illustrates a path selection table including information of the path candidate determined in the path candidate search process of Fig. 20, as opposed to the path selection table of Fig. 25, when the function pipeline process of Fig. 23 is performed in the manner of Fig. 14;
Fig. 28 illustrates the path candidate determined in the path candidate search process of Fig. 20 when the function pipeline process of Fig. 23 is performed in the manner of Fig. 14;
Fig. 29 is a flowchart illustrating in detail a pipeline execution process of the processes of Fig. 14;
Fig. 30 is a flowchart illustrating in detail the pipeline execution process of the processes of Fig. 14;
Fig. 31 illustrates the function pipeline process of Fig. 12 executed in the pipeline execution process of Figs. 29 and 30;
Fig. 32 illustrates the function pipeline process of Fig. 12 executed in the pipeline execution process of Figs. 29 and 30;
Fig. 33 is a flowchart illustrating in detail a pipeline execution process different from the pipeline execution process of Fig. 30;
Fig. 34 is a flowchart illustrating in detail a pipeline execution process different from the pipeline execution process of Fig. 30; and
Fig. 35 is a flowchart illustrating in detail a pipeline execution process different from the pipeline execution process of Fig. 18.

### DESCRIPTION OF THE PREFERRED EMBODIMENTS

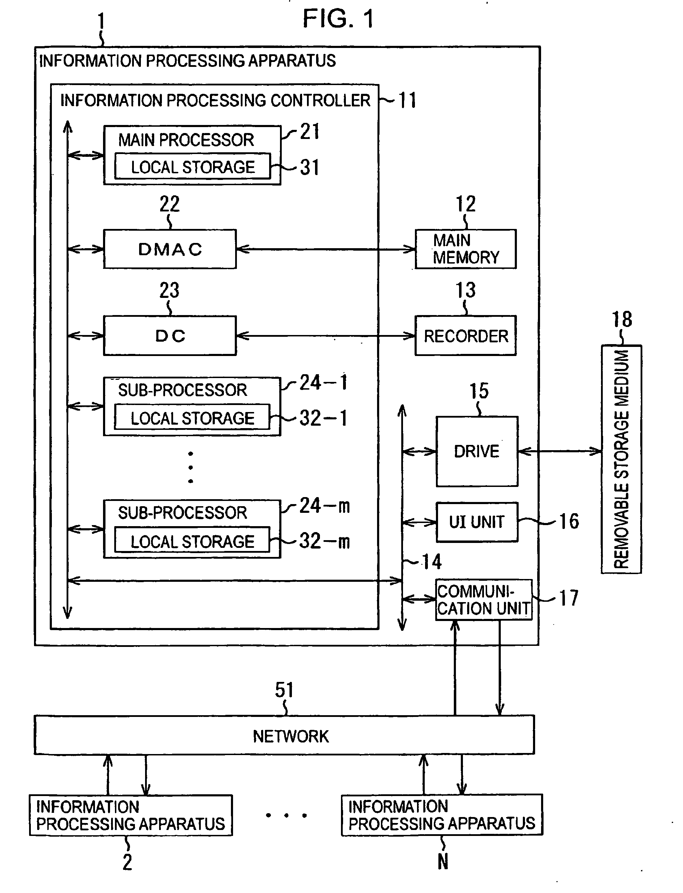

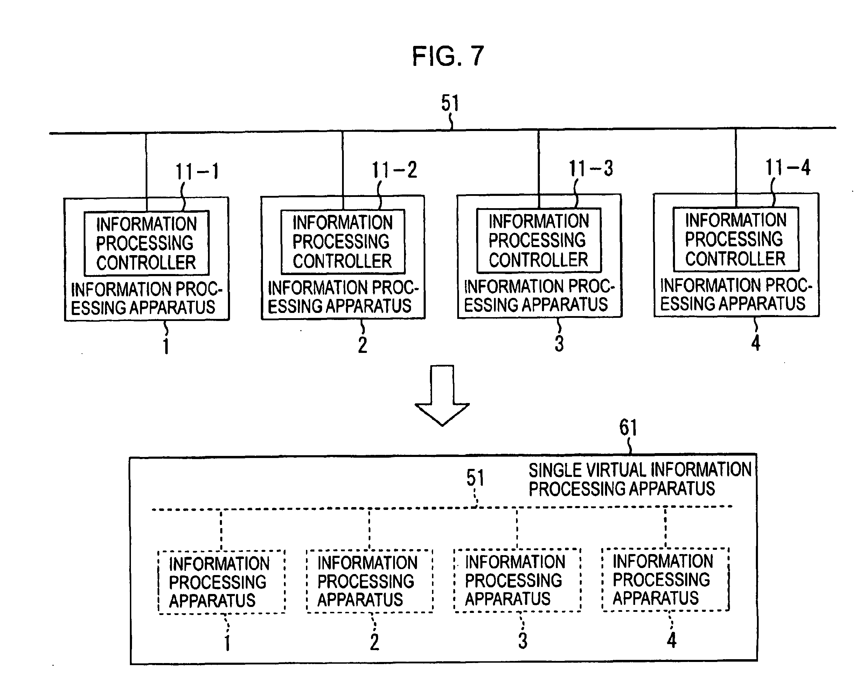

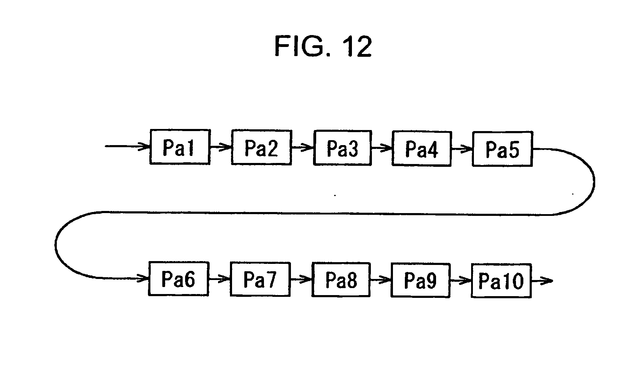

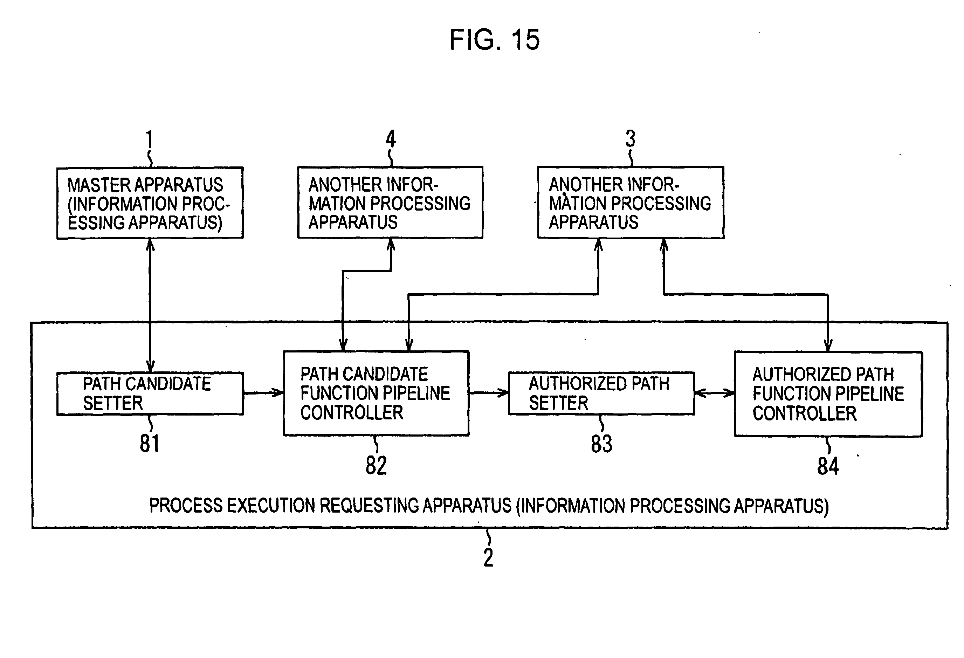

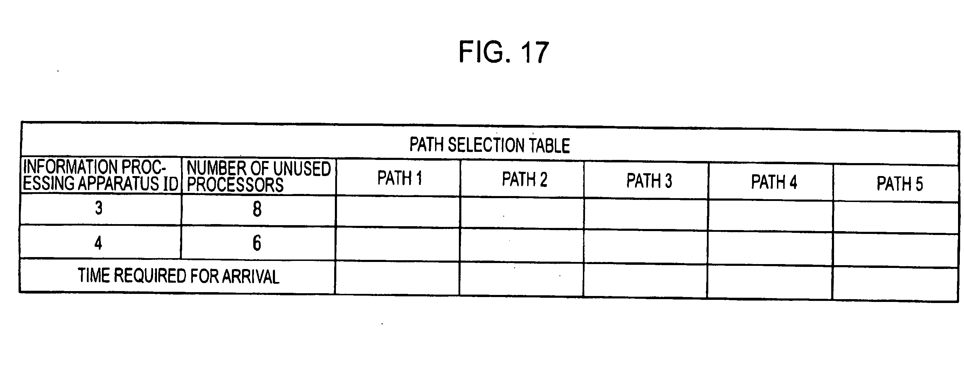

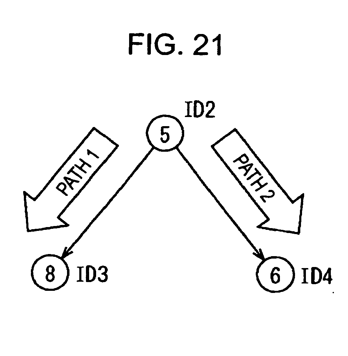

An information processing system (for example, an information processing system of Fig. 1 functioning as a single virtual information processing apparatus 61 of Fig. 7) of one embodiment of the present invention includes at least three information processing apparatuses (for example, four information processing apparatuses 1 through 4 of Fig. 7). In order to perform a function pipeline process in response to the inputting of data of each one unit so that processes of a plurality of functional blocks (for example, function blocks Pa1 through Pa10 of Fig. 12) are successively performed on the data in a first sequence, the system sets a path in which each of at least two of information processing apparatuses is virtually arranged in a second sequence, performs first control for assigning a processor, available for each of at least two of the information processing apparatuses contained in the path, at least one of the processes of the plurality of function blocks in accordance with the first sequence and the second sequence, and then performs second control for causing the data to successively pass through the path on a per unit basis. A predetermined one (for example, an information processing apparatus 2 of Fig. 15 as a process execution requesting apparatus) of at least three information processing apparatuses includes a candidate setting unit (for example, a path candidate setter 81 of Fig. 15) for setting at least two path candidates (a path 1 of "an information processing apparatus 2 identified by ID2 → an information processing apparatus 3 identified by ID3", and a path 2 of "the information processing apparatus 2 → an information processing apparatus 4" identified by ID4 shown in Fig. 21) based on the number of processors (a descriptive value in the item of the number of unused sub-processors in a path selection table of Fig. 17) available for each one of at least three information processing apparatuses, a first control unit (for example, a path candidate function pipeline controller 82 of Fig. 15) for performing the first control and the second control using individually at least two path candidates set by the candidate setting unit, a path setting unit (for example, an authorized path setter 83 of Fig. 15) for setting, as the path from among at least two path candidates set by the candidate setting unit, a path candidate through which the data of one unit has passed the fastest through the second control of the first control unit, and a second control unit (for example, an authorized path function pipeline controller 84 of Fig. 15) for performing the second control by using the path after the path is set by the path setting unit.

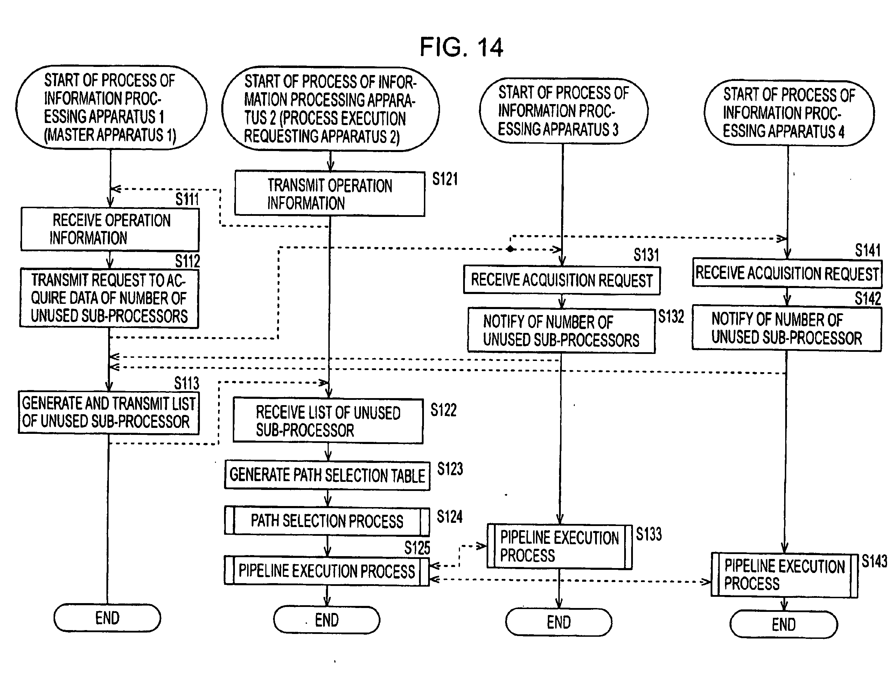

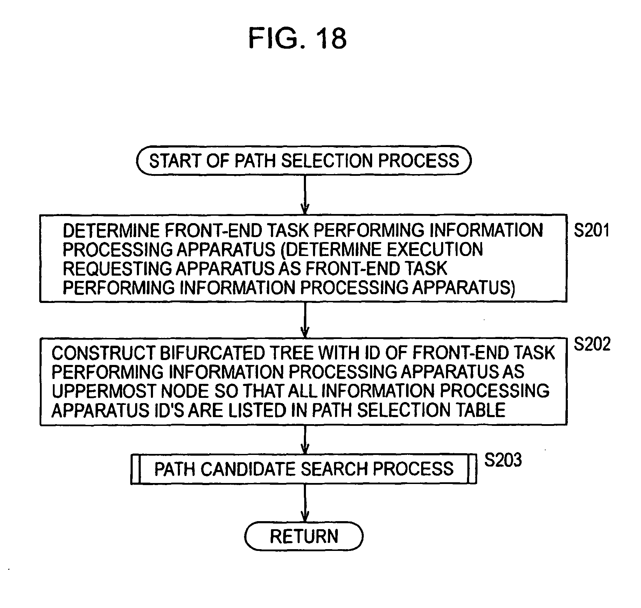

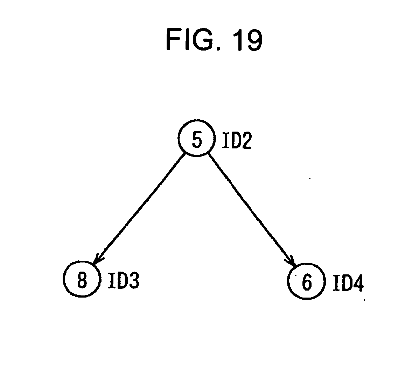

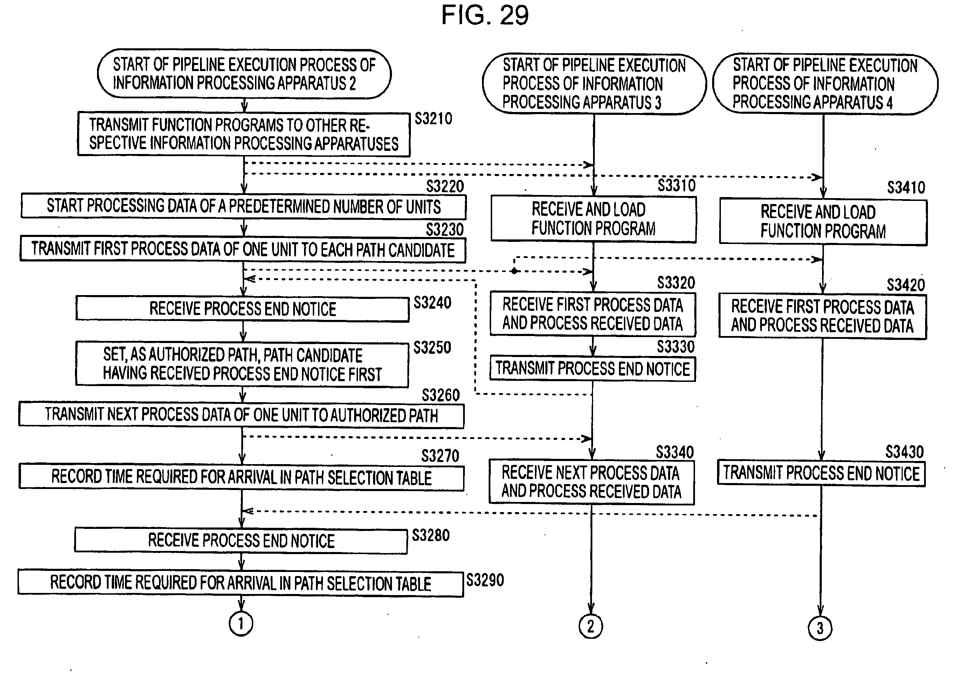

In accordance with one embodiment of the present invention, an information processing method of an information processing system including at least three information processing apparatuses is provided. The information processing method includes steps of setting at least two path candidates based on the number of processors available for each one of at least three information processing apparatuses (for example, a path selection process in step S124 of Fig. 14, more specifically a path selection process in accordance with flowcharts of Figs. 18 and 19), performing the first control and the second control using individually at least two set path candidates (for example, steps S3210 through S3240 of Fig. 29 in a pipeline execution process in step S125 of Fig. 14), setting, as the path from among at least two set path candidates, a path candidate (for example, a path 1 of "the process execution requesting apparatus 2 → the other information processing apparatus 3" of Fig. 29) through which the data of one unit has passed the fastest through the second control (for example, step S3250 of Fig. 29 in the pipeline execution process in step S125 of Fig. 14), and performing the second control by using the path after the path is set (for example, step S3260 and subsequent steps of Fig. 29 in the pipeline execution process in step S125 of Fig. 14).

In accordance with one embodiment of the present invention, one of at least three information processing apparatuses included in an information processing system is provided. A predetermined one (for example, the process execution requesting apparatus 2 of Fig. 15) of at least three information processing apparatuses includes a candidate setting unit (for example, the path candidate setter 81 of Fig. 15) for setting at least two path candidates based on the number of processors available for each one of at least three information processing apparatuses, a first control unit (for example, the path candidate function pipeline controller 82 of Fig. 15) for performing the first control and the second control using individually at least two path candidates set by the candidate setting unit, a path setting unit (for example, the authorized path setter 83 of Fig. 15) for setting, as the path from among at least two path candidates set by the candidate setting unit, a path candidate through which the data of one unit has passed the fastest through the second control of the first control unit, and a second control unit (the authorized path function pipeline controller 84 of Fig. 15) for performing the second control by using the path after the path is set by the path setting unit.

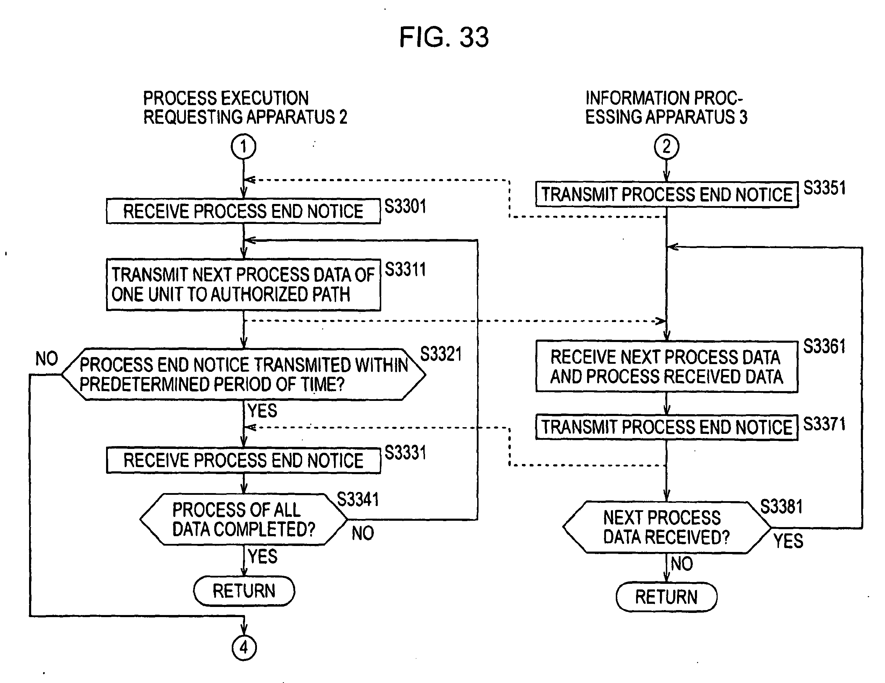

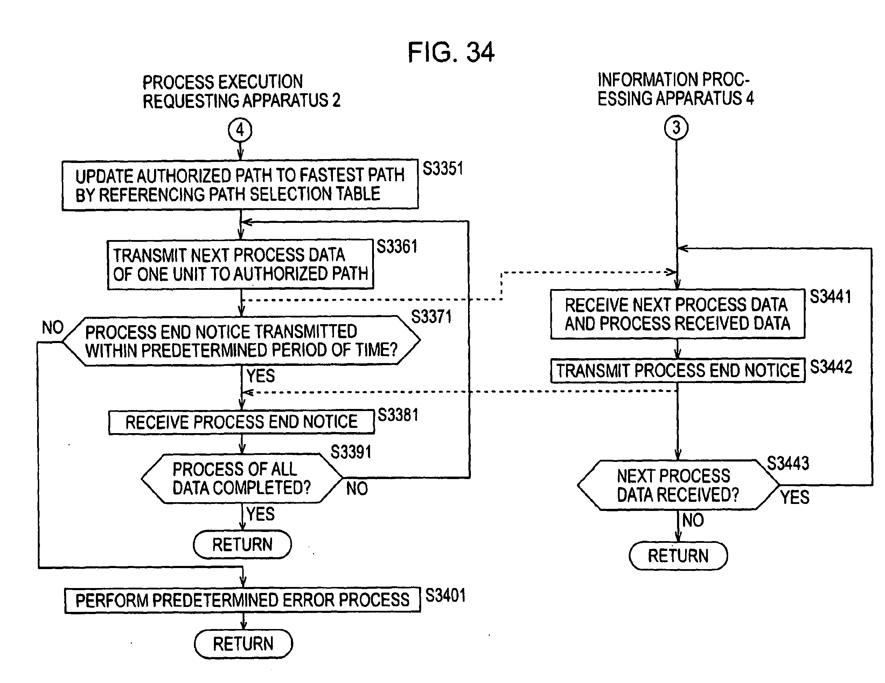

In the information processing apparatus, the path setting unit resets a path from among at least two candidates not yet set as the path if a predetermined condition is satisfied, and the second control unit performs the second control (for example, a process of the flowcharts of Figs. 33 and 34) using the reset path after the path is reset by the path setting unit.

In accordance with one embodiment of the present invention, an information processing method of an information processing system including at least three information processing apparatuses is provided. The information processing method includes steps of setting at least two path candidates based on the number of processors available for each one of at least three information processing apparatuses (for example, the path selection process in step S124 of Fig. 14, more specifically the path selection process in accordance with flowcharts of Figs. 18 and 19), performing the first control and the second control using individually at least two set path candidates (for example, steps S3210 through S3240 of Fig. 29 in the pipeline execution process in step S125 of Fig. 14), setting, as the path from among at least two set path candidates, a path candidate through which the data of one unit has passed the fastest through the second control (for example, step S3250 of Fig. 29 in the pipeline execution process in step S125 of Fig. 14), and performing the second control by using the path after the path is set (for example, step S3260 and subsequent steps of Fig. 29 in the pipeline execution process in step S125 of Fig. 14).

In accordance with one embodiment of the present invention, a computer program for performing the above-described method is provided. The computer program is executed by a computer such as an information processing controller 11 of Fig. 1.

In accordance with one embodiment of the present invention, a storage medium storing the computer program of is provided.

The embodiments of the present invention are described below with reference to the drawings.

Fig. 1 illustrates an information processing system of one embodiment of the present invention. The information processing system includes N information processing apparatuses (N is an integer number equal to or greater than 1).

As shown in Fig. 1, the information processing system includes N information processing apparatuses from 1 to N, connected to each other via a network 51.

The information processing system executes the above-referenced grid computing.

In response to an execution command of a predetermined distributed process, the information processing apparatus 1 generates a software cell, containing data and programs, required to execute at least a portion of the distributed process, and transmits the software cell to at least one of the information processing apparatuses 2 through N via the network 51.

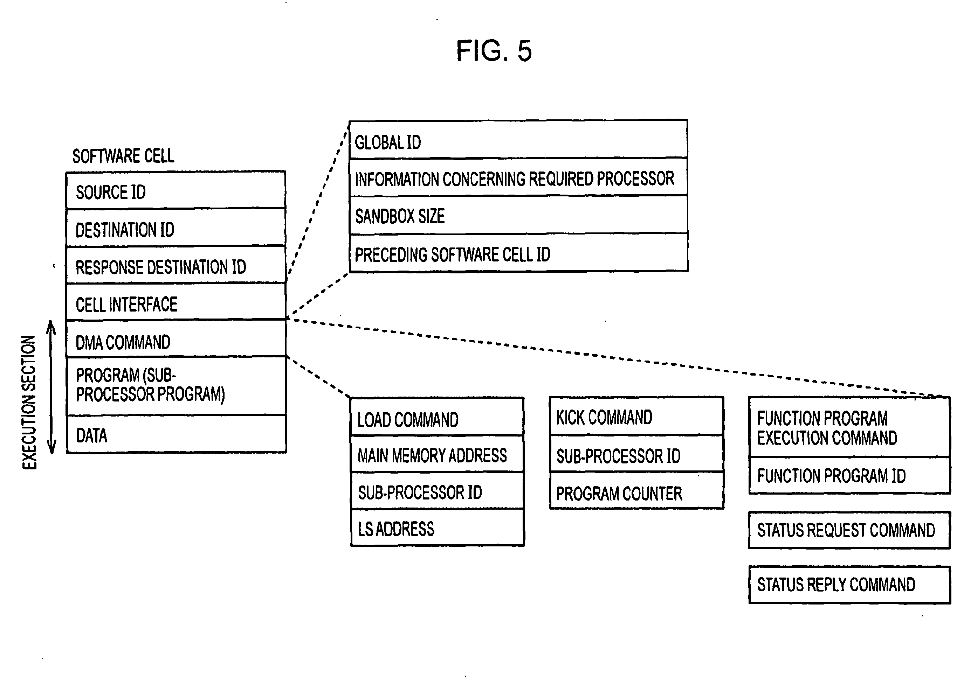

The software cell will be described later with reference to Fig. 5.

At least one of the information processing apparatuses 1 through N having received the software cell executes a process required by the information processing apparatus 1.

Each of at least one of the information processing apparatuses 1 through N transmits data as the process results to the information processing apparatus 1 via the network 51, as necessary. As will be described later, the transmission destination of the data is not limited to the information processing apparatus 1. The resulting data is also transmitted in a software cell. More specifically, each of the information processing apparatuses 2 through N generates a software cell and transmits the software cell to another information processing apparatus as necessary.

Upon receiving data from at least one of the information processing apparatuses 2 through N, the information processing apparatus 1 executes a predetermined process on the data or records the data therein.

Grid computing is thus executed making use of the software cell.

The information processing apparatus 1 is described below.

The information processing apparatus 1 includes an information processing controller 11, a main memory 12, a recorder 13, a bus 14, a drive 15, a user interface (UI) unit 16, and a communication unit 17.

The information processing controller 11 is assigned an apparatus ID that uniquely identifies the information processing apparatus 1 over the entire network 51.

The information processing controller 11 executes a variety of programs recorded on the main memory 12 and generally controls the information processing apparatus 1.

For example, the information processing controller 11 generates a software cell and supplies the software cell to the communication unit 17 via the bus 14. The information processing controller 11 transfers a software cell, supplied from the communication unit 17, to the recorder 13.

Furthermore, the information processing controller 11 acquires a command from the UI unit 16 via the bus 14, and performs a predetermined process in response to the command.

The information processing controller 11 includes a main processor 21, a direct memory access controller (DMAC) 22, a disk controller (DC) 23, and sub-processors 24-1 through 24-m (m is any integer number equal to or greater than 0), mutually connected to each other via buses.

The main processor 21 is assigned a main processor ID for identifying itself. Similarly, the sub-processors 24-1 through 24-m are assigned respective sub-processor IDs.

The main processor 21 includes a local storage 31 and temporarily stores data and programs, loaded from the main memory 12, in the local storage 31. The main processor 21 reads the data and the programs from the local storage 31, and performs a variety of processes based on the data and the programs.

For example, the main processor 21 manages the schedule of execution of the programs of the sub-processors 24-1 through 24-m, and performs a variety of process to generally manage the information processing controller 11 (information processing apparatus 1).

The main processor 21 performs other processes to manage the other information processing apparatuses that perform distributed process. More specifically, the main processor 21 generates a software cell and supplies the generated software cell to the communication unit 17 via the bus 14 to cause at least one of the information processing apparatuses 2 through N connected via the network 51 to perform distributed process. Upon receiving a software cell from the communication unit 17 via the bus 14, the main processor 21 stores programs and data contained in the software cell onto the main memory 12.

The main processor 21 is thus designed to execute programs for management. The main processor 21 can execute programs other than the programs for management. In such a case, the main processor 21 functions as a sub-processor.

The sub-processors 24-1 through 24-m execute programs in parallel and independently to process data under the control of the main processor 21. As necessary, a program executed by the main processor 21 cooperates with programs executed by the sub-processors 24-1 through 24-m.

The sub-processors 24-1 through 24-m include local storages 32-1 through 32-m, respectively. The sub-processors 24-1 through 24-m temporarily store data and programs in the local storages 32-1 through 32-m thereof. The sub-processors 24-1 through 24-m read the data and the programs from the local storages 32-1 through 32-m, respectively, and perform a variety of processes in accordance with the data and the programs.

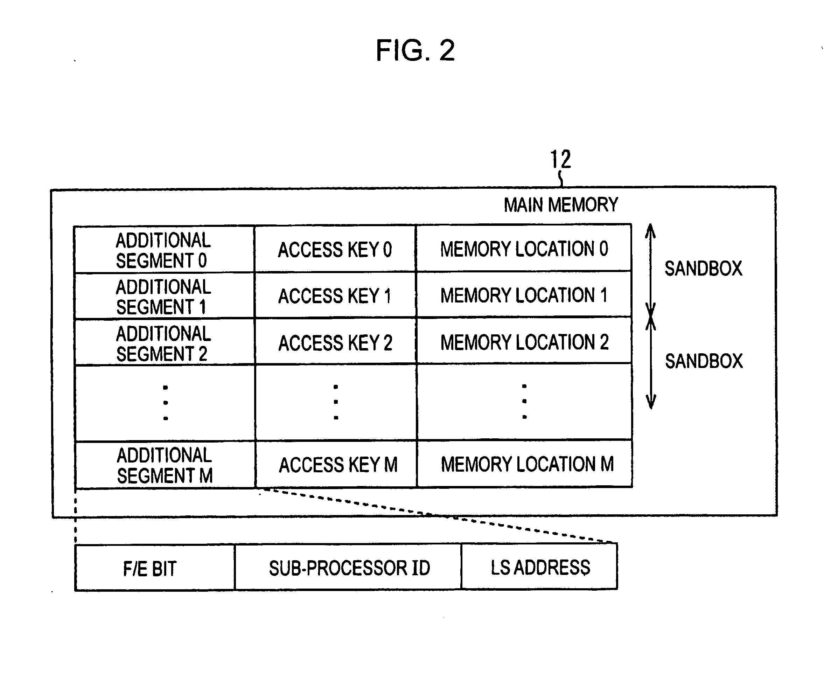

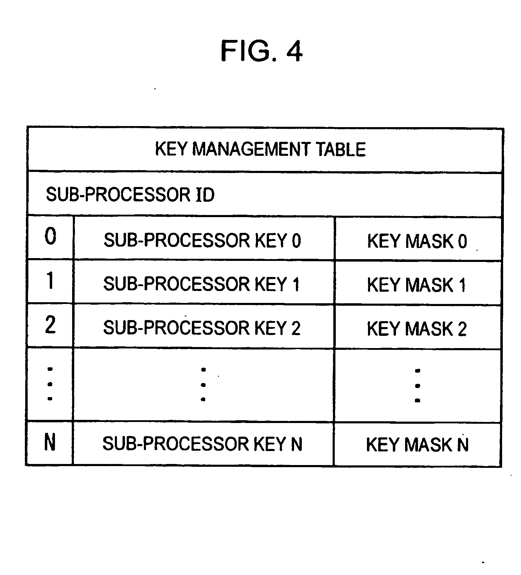

In response to a command from at least one of the main processor 21 and the sub-processors 24-1 through 24-m, the DMAC 22 manages accessing to the programs and data stored in the main memory 12. Using a key management table of Fig. 4 to be discussed later, the DMAC 22 manages accessing to the main memory 12. The access management to the main memory 12 will be described later with reference to Figs. 2 through 4.

In response to a command from at least one of the main processor 21 and the sub-processors 24-1 through 24-m, the DC 23 manages accessing to the programs and data stored in the recorder 13.

The information processing controller 11 thus constructed is connected to the main memory 12 and the recorder 13.

The main memory 12 is made of a random access memory (RAM), for example. The main memory 12 temporarily stores a variety of programs executed by at least one of the main processor 21 and the sub-processors 24-1 through 24-m, and a variety of data used or generated during the execution of such programs.

The recorder 13 is composed of at least one device such as a hard disk device. The recorder 13 can be composed of a plurality of external memory devices. The recorder 13 temporarily stores a variety of programs executed by at least one of the main processor 21 and the sub-processors 24-1 through 24-m, and a variety of data used or generated during the execution of such programs. The recorder 13 also stores data supplied from the information processing controller 11.

The drive 15, the UI unit 16, and the communication unit 17 are connected to the information processing controller 11 via the bus 14.

The drive 15 is connected to the bus 14 as necessary. The drive 15 is loaded with a removable recording medium 18 such as a magnetic disk, an optical disk, a magneto-optic disk, or a semiconductor memory. A computer program read from the removable recording medium 18 is installed onto the recorder 13 or the like as necessary.

The UI unit 16 is composed an input interface such as a remote controller (including a photosensitive receiver), a keyboard, and a mouse, and an output interface such as a display device and a loudspeaker. A user inputs a variety of information to the information processing apparatus 1 operating the UI unit 16. The information processing apparatus 1 presents a variety of information to the user using the UI unit 16.

The communication unit 17 is composed of a modem, a terminal adapter, a radio communication unit, etc. The communication unit 17 controls communications performed with each of the information processing apparatuses 2 through N via the network 51. The communication unit 17 transmits the software cell, supplied from the information processing controller 11, to at least one of the information processing apparatuses 2 through N. The communication unit 17 receives software cells transmitted from at least one of the information processing apparatuses 2 through N, and supplies the software cells to the information processing controller 11 via the bus 14.

The structure of the information processing apparatus 1 has been discussed.

Each of the information processing apparatuses 2 through N is substantially identical in structure to the information processing apparatus 1, and the discussion thereof is omitted here.

When an element of each of the information processing apparatuses 2 through N needs to be discussed, a corresponding element in the information processing apparatus 1 is discussed instead. More specifically, if the main processor of the information processing apparatus 2 needs to be discussed, the main processor 21 of the information processing apparatus 2 is named. The number of sub-processors used is different from apparatus to apparatus in the information processing apparatuses 2 through N. More specifically, the suffix number "m" of the sub-processor 24-m is different from apparatus to apparatus in the information processing apparatuses 2 through N.

The information processing apparatuses 1 through N substantially identical to each other in structure perform substantially the same operations (processes). When a predetermined operation (process) is discussed hereafter, the operation is representatively discussed with reference to one of the information processing apparatuses 1 through N, and the discussion of the counterpart in the other apparatuses is omitted.

The information processing apparatuses 1 through N are not limited to the above-discussed structure. Functions may be added or deleted as necessary, and the structure of the apparatus may be changed accordingly.

The structure of the information processing apparatuses 1 through N has been discussed with reference to Fig. 1.

An access operation of one of the sub-processors 24-1 through 24-m in the information processing apparatus 1 for accessing the main memory 12 is described below with reference to Figs. 2 through 4.

If it is not necessary to discriminate one from another among the sub-processors 24-1 through 24-m, a sub-processor 24 represents the sub-processors 24-1 through 24-m in the following discussion. Similarly, the local storages 32-1 through 32-m are represented by a local storage 32 in the following discussion.

As shown in Fig. 2, the main memory 12 is constructed of memory locations specifying a plurality of addresses. Each memory location is assigned an additional segment storing information relating to the state of data. The additional segment stores information indicating the state of data, and more specifically, includes an F/E bit, a sub-processor ID and a local storage (LS) address. Each memory location is assigned an access key to be discussed later.

An F/E bit of "0" indicates that data is currently being processed by the sub-processor 24 or that data is invalid and not updated in its empty state. The F/E bit of "0" thus indicates that the data cannot be read from that memory location. Furthermore, the F/E bit of "0" indicates that data can be written on that memory location. If data is written onto that memory location, the F/E bit is set to "1".

The F/E bit of "1" indicates that the data of that memory location is not yet read by the sub-processor 24 and is unprocessed and updated data. The data of the memory location with the F/E bit of "1" is readable. If the data is read by the sub-processor 24, the F/E bit is set to "0". The F/E bit of "1" indicates that the corresponding memory location receives no data in response to data writing.

Read reserve can be set in the memory location with the F/E bit of "0", namely, in a read disabled/write enabled state. To reserve a read operation in the memory location having the F/E bit of "0", the sub-processor 24 writes a sub-processor ID and an LS address of the sub-processor 24 as read reserve information onto the additional segment of the memory location for read reserve. When the sub-processor 24 writes data on the read-reserved memory location and the F/E bit is set to "1", in other words, the F/E bit shifts to a read enabled/write disabled sate, data then can be read to the local storage 32 identified by the read information, namely, to the local storage 32 identified by the sub-processor ID and the LS address written beforehand on the additional segment.

When a plurality of sub-processors 23 process data at multiple stages, the read and write of the data at each memory location are controlled as described above. The sub-processor 24 performing a back stage process can read front-stage processed data immediately after the sub-processor 24 performing a front stage process writes processed data onto a predetermined address in the main memory 12.

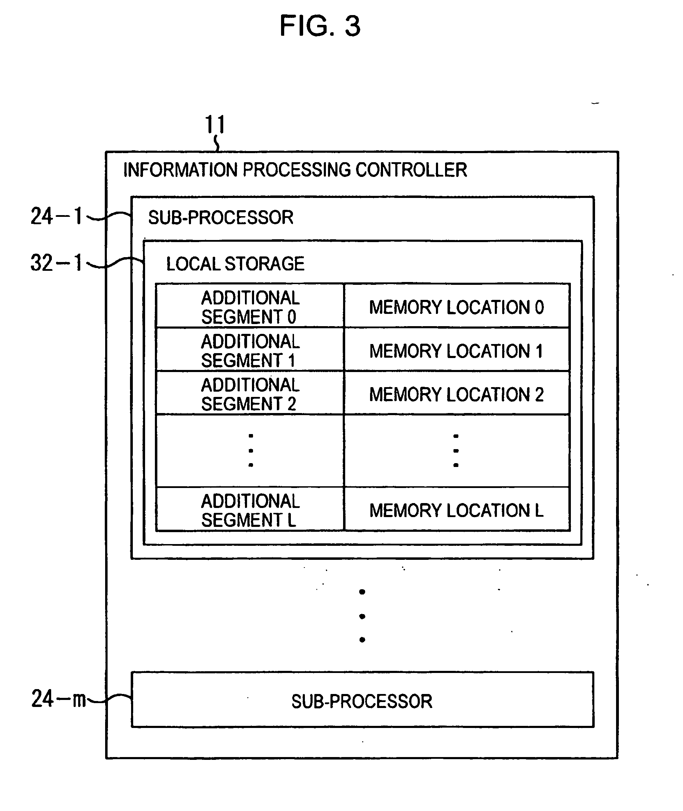

As shown in Fig. 3, the local storage 32-1 in the sub-processor 24-1 is composed of memory locations, each specifying a plurality of addresses. The sub-processor 24-1 is identical in structure to the other sub-processors 24-2 through 24-m. In the discussion with reference to Fig. 3, the sub-processor 24 represents all sub-processors and the local storage 32 represents all local storage.

As in the main memory 12 of Fig. 2, each memory location is assigned an additional segment. The additional segment in the local storage 32 includes a busy bit.

To store the data stored on the main memory 12 into the memory location of the local storage 32 of the sub-processor 24, the sub-processor 24 sets the corresponding busy bit to "1" for reservation. No further data cannot be stored onto the memory location with the busy bit at "1". When the data is stored in the memory location in the local storage 32 and then read, the busy bit is set to "0" allowing other data to be stored there.

As shown in Fig. 2, the main memory 12 includes a plurality of sandboxes. The sandbox is used to fix an area in the main memory 12. Each sub-processor 24 is assigned a sandbox. The sub-processor 24 can exclusively use that assigned sandbox. More specifically, the sub-processor 24 can use the assigned sandbox, but cannot access data beyond the area of the assigned sandbox.

The main memory 12 includes a plurality of memory locations, and each sandbox is a set of memory locations.

A key management table of Fig. 4 is used to exclusively control the main memory 12. The key management table is associated with the DMAC 22. Each entry in the key management table includes a sub-processor ID, a sub-processor key, and a key mask.

To access the main memory 12, the sub-processor 24 outputs a read command or a write command to the DMAC 22. The command contains a sub-processor ID identifying the sub-processor 24 and an address of the main memory 12 as an access target.

To execute the command supplied from the sub-processor 24, the DMAC 22 checks the sub-processor key of the sub-processor 24 as an access requesting source by referencing the key management table. The DMAC 22 compares the checked sub-processor key of the access requesting source with an access key assigned to the memory location of the main memory 12 as the access target. Only if the two keys match, the DMAC 22 executes the command supplied from the sub-processor 24.

When any bit is shifted to "1" in the key mask recorded in the key management table of Fig. 4, the bit corresponding to the sub-processor key associated with the key mask is set to "0" or "1".

For example, the sub-processor key is now "1010". Accessing to only a sandbox having an access key of "1010" is possible with this sub-processor key. If a key mask associated with the sub-processor key is set to "0001", a key mask bit set to "1" is masked from a match determination between the sub-processor key and the access key. No match determination is performed on a key mask bit set to "1". With the sub-processor key "1010", sandboxes having access keys of "1010" and "1011" are accessible.

The exclusiveness of the sandbox of the main memory 12 is thus assured. If a plurality of sub-processors 23 need to process data at multiple stages, only both the sub-processor 24 performing the front stage process and the sub-processor 24 performing the back stage process can access predetermined addresses of the main memory 12 to protect data.

The key mask value can be modified as discussed below. In the information processing apparatus 1 of Fig. 1, all key mask values are "0" immediately subsequent to power on. A program loaded to the main processor 21 is now executed in cooperation with a program loaded to the sub-processor 24. Resulting processed data output from the sub-processor 24-1 is stored in the main memory 12. To output the resulting processed data stored in the main memory 12 to the sub-processor 24-2, the area of the main memory 12 storing the resulting processed data output from the sub-processor 24-1 needs to be accessible by each of the sub-processor 24-1 and the sub-processor 24-2. In such a case, the main processor 21 modifies the key mask values to set up an area in the main memory 12 accessible by the plurality of sub-processors 24. The multi-stage process is thus performed by the sub-processors 24.

For example, the sub-processor 24-1 performs a predetermined process on data transmitted from the other processing apparatus, and stores the processed data in a first area in the main memory 12. The sub-processor 24-2 performs a predetermined process on the read data, and stores the processed data onto a second area different from the first area in the main memory 12.

With a sub-processor key of the sub-processor 24-1 set to "0100", an access key of the first area of the main memory 12 set to "0100", a sub-processor key of the sub-processor 24-2 set to "0101", and an access key of the second area of the main memory 12 set to "0101", the sub-processor 24-2 is unable to access the first area of the main memory 12. By modifying the key mask to "0001", the sub-processor 24-2 can access the first area of the main memory 12.

The access operation of the sub-processor 24 in the information processing apparatus 1 accessing the main memory 12 has been discussed with reference to Figs. 2 through 4.

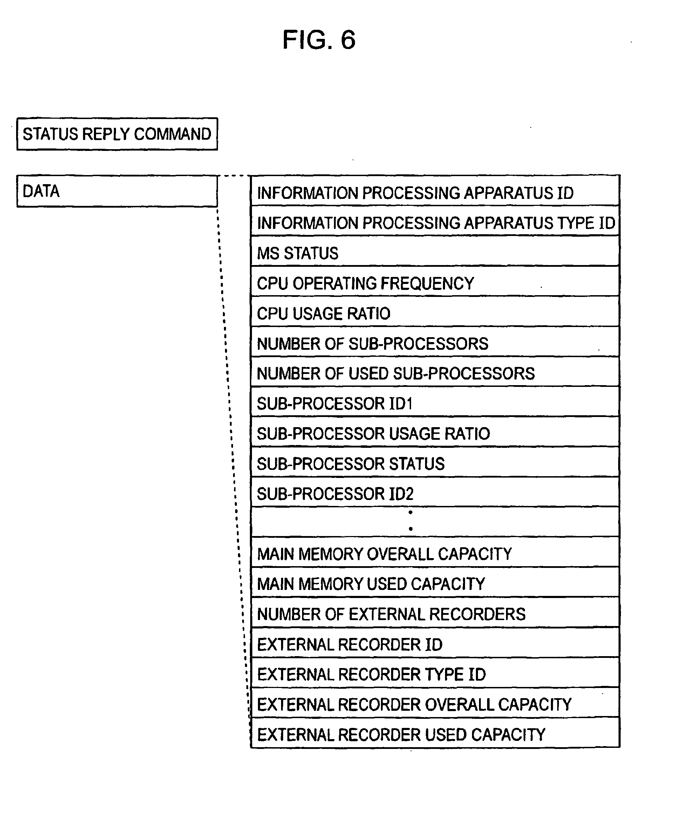

The operation of the information processing apparatus 1 is described below with reference to Figs. 5 and 6. The information processing apparatus 1 generates a software cell and causes at least one of the information processing apparatuses 2 through N to perform distributed process based on the software cell. In the operation discussed with reference to Figs. 5 and 6, the information processing apparatuses 2 through N are collectively referred to as the other information processing apparatuses.

The main processor 21 in the information processing apparatus 1 generates the software cell of Fig. 5, and then transmits the generated software cell to the other information processing apparatus via the network 51. Fig. 5 illustrates the structure of the software cell.

As shown in Fig. 5, the software cell is composed of a source ID, a destination ID, a response destination ID, a cell interface, a DMA (direct memory access) command, a program (sub-processor program), and data.

The source IDs include a network address of the information processing apparatus 1 as a source of the software cell, an information processing apparatus ID of the information processing controller 11 in the information processing apparatus 1, and identifiers of the main processor 21 and the sub-processor 24-1 through 24-m contained in the information processing controller 11 in the information processing apparatus 1 (a main processor ID and sub-processor IDs).

The destination IDs include the network address of the other information processing apparatus as the destination of the software cell, the apparatus ID of the information processing controller 11 in the other information processing apparatus, and IDs of the main processor 21 and the sub-processors 24-1 through 24-m in the information processing controller 11 of the other information processing apparatus.

The response destination IDs include the network address of the information processing apparatus (typically but not always the information processing apparatus 1) as a response destination of the execution results of the software cell, the apparatus ID of the information processing controller 11 in the information processing apparatus, and IDs of the main processor 21 and the sub-processors 24-1 through 24-m in the information processing controller 11.

The number of sub-processors 24 may change from apparatus to apparatus in the information processing apparatuses 1 through N as the source, the destination, and the response destination. The suffix number "m" of the sub-processor 24-m quoted in the above discussion of the source ID, the destination ID, and the response destination ID is not always the same value.

The cell interface includes information required to use the software cell, and is composed of a global ID, information of a required sub-processor, a sandbox size, and a preceding software cell ID as shown in Fig. 5.

The global ID uniquely identifies the software cell over the entire network 51, and is generated based on the descriptive value of source ID, and date and time of generation or transmission of the software cell.

The information of the required sub-processor shows the number of sub-processors required to execute the software cell.

The sandbox size shows the memory capacities of the main memory 12 and the local storage of each sub-processor 24 required to execute the software cell.

The preceding software cell ID is an identifier of a preceding software cell within software cells forming one group requesting a sequential execution of streaming data.

The execution section of the software cell in succession to the cell interface is composed of DMA commands, programs, and data.

The DMA commands include a series of commands required to initiate the program that follows the DMA commands. The programs include a sub-processor program to be executed by the sub-processor 24. The data here is to be processed by the programs including the sub-processor program or other programs.

The DMA commands include at least one of a load command, a kick command, a function program execution command, a status request command, and a status reply command, as shown in Fig. 5.

The load commands include a command used to load information stored in the main memory 12 onto the local storage of the sub-processor 24. The load command is used together with a main memory address, a sub-processor ID and an LS address all as an integral part thereof. The main memory address identifies a predetermined area in the main memory 12 as a load source of the information. The sub-processor ID and the LS address are respectively the identifier of the sub-processor 24 as the load destination of the information and the address of the local storage of the sub-processor 24.

The kick commands include a command to start the execution of the program. The kick command is used together with a sub-processor ID and a program counter all as an integral part thereof. The sub-processor ID identifies the sub-processor 24 to be kicked, and the program counter provides an address to a program execution program counter.

The function program execution commands include a command to be used for the information processing apparatus 1 to request another apparatus to execute the function program. The function program execution command is used together with a function program ID as an integral part thereof. The function program ID identifies a function program that is requested by the corresponding function program execution command.

Upon receiving from the information processing apparatus 1 the software cell with the DMA command being the function program execution command, the information processing controller 11 in the other information processing apparatus identifies, in response to the descriptive value of a function program ID, the function program to be initiated. The function program will be described later with reference to Fig. 7 and other drawings.

The status request commands include a command used to transmit, to the information processing apparatus identified by the response destination ID (information processing apparatus 1, for example), device information relating to current operational status of the information processing apparatus identified by the destination ID.

The status reply command is a DMA command contained in a second software cell that is generated by the other information processing apparatus as a reply to the status request command when a first software cell with the DMA command being the status request command is transmitted from the information processing apparatus 1 to the other information processing apparatus.

Upon receiving the first software cell with the DMA command being the status request command, the other information processing apparatus generates the second software cell with the DMA command being the status reply command. The other information processing apparatus transmits the second software cell to the information processing apparatus identified by the response destination ID in the first software cell (information processing apparatus 1, for example).

The data of the second software cell with the DMA command being the status reply command contains device information of Fig. 6. Fig. 6 illustrates the structure of a data area of the second software cell with the DMA command being the status reply command.

The ID of the other information processing apparatus transmitting the second software cell containing the status reply command is described in the information processing apparatus ID. The other information processing apparatus is now powered on. The main processor 21 contained in the information processing controller 11 of the other information processing apparatus generates the information processing apparatus IDs, based on the date and time of power on, the network addresses of the other information processing apparatus, and the number of sub-processors 24 contained in the information processing controller 11 of the other information processing apparatus.

The information processing apparatus ID contains a value indicative of features of the other information processing apparatus. The values indicative of the features of the other information processing apparatus are information representing the types of the apparatus. For example, the information indicates that the other information processing apparatus is one of a hard disk recorder, a personal digital assistant (PDA), a portable compact disk (CD) player, or the like. Other functions, such as audio playback or moving image playback can be incorporated as the features of the other information processing apparatus. A unique value is assigned to each of the features (functions) and at least one feature value representing the feature of the other information processing apparatus is described in the information processing apparatus ID. Upon receiving the second software cell containing the status reply command, an information processing apparatus (information processing apparatus 1, for example) learns, based on the descriptive value of the information processing apparatus ID, the features (including functions) of the other information processing apparatus that has transmitted the second software cell.

In a master/slave (MS) status, "0" or "1" is described to indicate whether the other information processing apparatus operates as a master apparatus or a slave apparatus. If the MS status is at "0", the apparatus operates as a master apparatus. If a value other than zero (for example, "1") at the MS status, the apparatus operates as a slave apparatus. The master apparatus and the slave apparatus will be described later with reference to Fig. 7 and subsequent drawings.

A main processor operating frequency is an operating frequency of the main processor 21 in the information processing controller 11 in the other information processing apparatus. A main processor usage ratio is a usage ratio of the main processor 21 taking into consideration all programs currently running on the main processor 21. More specifically, the main processor usage ratio is a ratio of the overall available performance of the main processor 21 to performance currently in use, and is calculated in million instruction per second (MIPS) or in a processor use time per unit time.

The number of sub-processors represents the number of sub-processors 24 contained in the information processing controller 11 in the other information processing apparatus. In the information processing controller 11 of Fig. 1, the "m" is described as the number of sub-processors.

The number of used sub-processors represents the number of sub-processor 24 currently in use in the information processing controller 11 in the other information processing apparatus. The used sub-processor 24 corresponds to a sub-processor bearing values corresponding to "reserved" or "busy". The information processing apparatus receiving the second software cell containing the status reply command (information processing apparatus 1, for example) learns the number of unused processors on the other information processing apparatus based on the descriptive value of the number of used sub-processors. The number of unused sub-processors will be discussed later with reference to Fig. 14 and other drawings.

The ID of the sub-processor 24-1, from among the sub-processors 24-1 through 24-m in the information processing controller 11 in the other information processing apparatus, is described in the sub-processor ID1.

Information relating to the sub-processor 24-1 identified by the sub-processor ID1 is described in each of the sub-processor usage ratio and the sub-processor status, subsequent to the sub-processor ID1.

The usage ratio of the sub-processor 24-1 relating to a program currently executed by the sub-processor 24-1 or reserved for the sub-processor 24-1 for execution is described in the sub-processor usage ratio.

The sub-processor status indicates the status of sub-processor 24-1, and can be one of "unused", "reserved", and "busy". The status "unused" indicates that the sub-processor 24-1 is neither currently used nor reserved. The status "reserved" indicates that the sub-processor 24-1 is not currently used but reserved. The status "busy" indicates that the sub-processor 24-1 is currently used.

If a value indicating "busy" (for example, "0") is written in the sub-processor status, the current usage ratio of the sub-processor 24-1 is described in the sub-processor usage ratio immediately ahead of the sub-processor status. If a value indicating "reserve" (for example "1") is written in the sub-processor status, an expected usage ratio of the sub-processor 24-1 planned to be used is described in the sub-processor usage ratio immediately ahead of the sub-processor status. If a value indicating "unused" (for example "2") is written in the sub-processor status, "0" is described in the sub-processor usage ratio immediately ahead of the sub-processor status, for example.

The sub-processor ID1, the sub-processor status, and the sub-processor usage ratio are set in a combination for the sub-processor 24-1, followed by similar combinations arranged for the sub-processors 24-2 through 24-m in that order.

The sub-processor ID, the sub-processor status, and the sub-processor usage ratio are thus set in a combination for each of the sub-processors 24-1 through 24-m.

A combination of the sub-processor IDm, the sub-processor status, and the sub-processor usage ratio of the last sub-processor 24-m is then followed by main memory overall capacity, and main memory used capacity. The main memory overall capacity is an overall memory capacity of the main memory 12 in the information processing controller 11, and the main memory used capacity is a currently used memory capacity of the main memory 12 in the information processing controller 11.

The number of external recorders indicates the number of external recorders forming the recorder 13 connected to the information processing controller 11 in the other information processing apparatus.

An external recorder ID uniquely identifies each of external recorders forming the recorder 13 connected to the information processing controller 11.

An external recorder type ID, an external recorder overall capacity, and an external recorder used capacity hold information relating to the external recorder identified by an immediately preceding external recorder ID. The external recorder type ID indicates the type of the external recorder (for example, a hard disk, a CD-RW (compact disk rewritable), a CD+RW (compact disk plus rewritable), a DVD-RW (digital versatile disk rewritable), a DVD+RW (digital versatile disk plus rewritable), a memory disk, an SRAM (static random-access memory), or a ROM (read-only memory)). The external recorder overall capacity indicates an overall storage capacity of the external recorder identified by the external recorder ID, and the recorder used capacity indicates a currently used capacity of the external recorder.

A single combination of the external recorder ID, the external recorder type ID, the external recorder overall capacity, and the external recorder used capacity is shown in Fig. 6. In practice, one combination is set for each of the recorders as the recorder 13. In the example of Fig. 6, the recorder 13 includes only a single unit. If a plurality of external recorders are connected to a single information processing controller 11, the combinations of the same number are set up, and the external recorders are assigned different external recorder IDs. The recorder type IDs, the recorder overall capacities and the recorder used capacities are managed on a per recorder basis.

To cause the other information processing apparatus to perform distributed processing, the main processor 21 in the information processing apparatus 1 generates a first software cell of Fig. 5, and transmits the generated first software cell to the other information processing apparatus. In the first software cell, the ID of the information processing apparatus 1 is described in the source ID, and the ID of the other information processing apparatus is described in the destination ID. For example, if the ID of the information processing apparatus 2 is described in the destination ID, the first software cell is transmitted to the information processing apparatus 2.

Upon receiving the first software cell, the main processor 21 in the other information processing apparatus stores the received first software cell in the main memory 12. The main processor 21 evaluates the first software cell and processes the DMA command contained in the first software cell.

More specifically, the main processor 21 in the other information processing apparatus executes the load command in the DMA commands. The main processor 21 reads information contained in the main memory address in the main memory 12 corresponding to the load command, and loads the read information to a predetermined area in the local storage 32 in the sub-processor 24 identified by the sub-processor ID and the LS address, each responsive to the load command. The information herein may contain the sub-processor program contained in the program in the first software cell and a variety of data contained in the data, or may contain other data.

If the kick command is contained as a DMA command, the main processor 21 in the other information processing apparatus outputs the kick command together with the program counter to the sub-processor 24 identified by the sub-processor ID.

The sub-processor 24 having received the kick command executes the sub-processor program in the first software cell in accordance with the kick command and the program counter. After storing the execution results in the main memory 12, the sub-processor 24 notifies the main processor 21 that the execution has been completed.

The main processor 21 in the other information processing apparatus reads the execution results of the sub-processor 24 from the main memory 12 as necessary, and generates the second software cell containing the execution results. More specifically, the main processor 21 generates the second software cell containing, as the data, the execution results, and the same ID as the response destination ID as the destination ID. The main processor 21 transmits the second software cell to the information processing apparatus identified by the destination ID (information processing apparatus 1, for example).

If the ID of the information processing apparatus 1 is described as the response destination ID in the first software cell transmitted from the information processing apparatus 1 to the other information processing apparatus with the DMA command being the status request command, the main processor 21 in the other information processing apparatus generates the second software cell having the DMA command being the status reply command and the device information of Fig. 6 as the data. The main processor 21 then transmits the generated second software cell to the information processing apparatus 1. The information processing apparatus 1 receives the second software cell and acquires the device information of Fig. 6 relating to the other information processing apparatus.

The data and the programs, transmitted from one to another among the information processing apparatuses 1 through N, are all contained in the software cell. A series of process steps from the generation of the software cell to the transmission of the software cell in those information processing apparatuses remains unchanged from those for the first software cell and the second software cell, and the discussion thereof is thus omitted.

The information processing apparatuses 1 through N exchange a variety of software cells, and perform a variety of processes in accordance with the software cells, thereby functioning as a single virtual information processing apparatus. As shown in Fig. 7, the information processing apparatuses 1 through 4 are interconnected to each other via the network 51. The information processing apparatuses 1 through 4 exchange software cells, and perform processes in accordance with the software cells, thereby functioning as a single virtual information processing apparatus 61.

The information processing apparatuses 1 through 4 perform processes subsequent to power on to operate as the single virtual information processing apparatus 61 of Fig. 7. The process of only the information processing apparatus 1 subsequent to power on is discussed herein because the other information processing apparatuses 2 though 4 also perform substantially the same process.

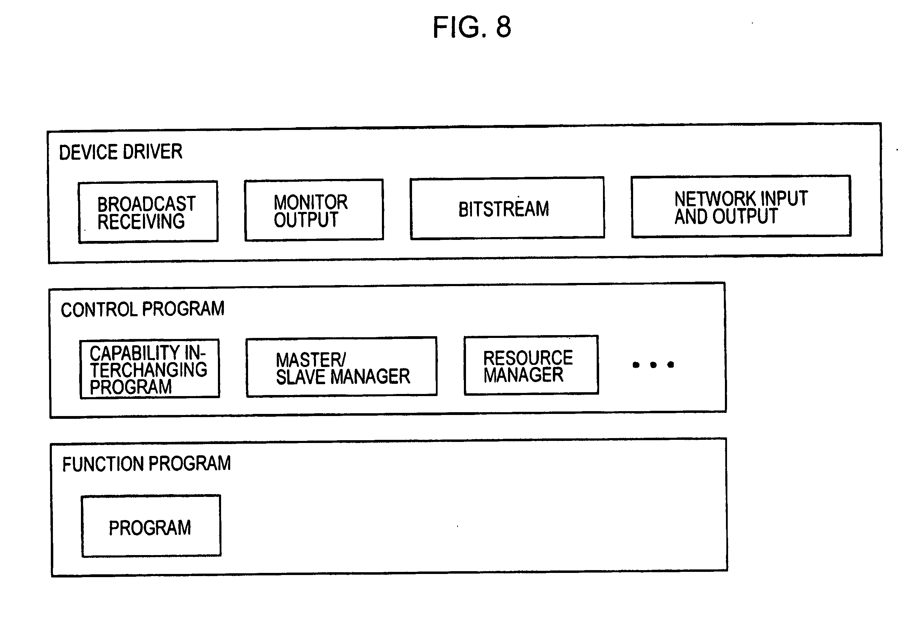

When the information processing apparatus 1 is switched on, the main processor 21 issues a read command to the DC 23 to read the master/slave manager and the capability interchanging program (see Fig. 8), from among control programs stored in the recorder 13. The main processor 21 thus reads to the master/slave manager and the capability interchanging program from the recorder 13 via the DC 23. The main processor 21 loads the master/slave manager and the capability interchanging program to the main memory 12 by executing a write command to the DMAC 22.

The main processor 21 reserves an area in the main memory 12 to store various values described in the data of Fig. 6, namely, values representing the device information of own information processing apparatus 1, and stores the values on the area reserved on the main memory 12. In other words, a table corresponding to the data of Fig. 6 is described in the area reserved on the main memory 12. Such a table is hereinafter referred to as a device information table.

The main processor 21 executes the master/slave manager loaded onto the main memory 12. After performing the process thereof, the master/slave manager notifies the main processor 21 of a process end notice. Upon receiving the process end notice from the master/slave manager, the main processor 21 executes the capability interchanging program.

The master/slave manager and the capability interchanging program are described in detail below.

The master/slave manager and the capability interchanging program are resident programs that remain operative until the information processing apparatus 1 is witched off, in other words, the power source is turned off.

After detecting that the information processing apparatus 1 is connected to the network 51, the master/slave manager checks whether another information processing apparatus is also connected to the network 51.

If the master/slave manager learns that no other information processing apparatus is present over the network 51, the master/slave manager describes "0" in the MS status in the device information table in the main memory 12. As previously discussed, the information processing apparatus 1 functions as a master apparatus hereinafter.

In the example of Fig. 7, the master/slave manager learns that the information processing apparatuses 2 through 4 are present. The master/slave manager describes a value other than "0" ("1", for example) in the MS status in the device information table on the main memory 12. The information processing apparatus 1 functions as a slave apparatus hereinafter.

The master/slave manager continuously monitors the (connection) status of the network 51. More specifically, the master/slave manager continuously monitors the connection status of the network 51, i.e., as to whether a new information processing apparatus is connected to the network 51, whether another information processing apparatus connected to the network 51 is switched off, and whether another information processing apparatus is disconnected from the network 51. Upon detecting any change in the connection status of the network 51, the master/slave manager transfer information concerning the change to the capability interchanging program. The information concerning the change transferred to the capability interchanging program is referred to a network status change notice.

If own information processing apparatus 1 functions as a master apparatus, the capability interchanging program acquires the device information of the other information processing apparatuses connected to the network 51. As shown in Fig. 7, the capability interchanging program acquires the device information of the information processing apparatuses 2 through 4.

The capability interchanging program generates the above-referenced first software cell with the DMA command being the status request command, and transmits the generated first software cell to the other information processing apparatus. In response to the status request command, the other information processing apparatus generates the above-referenced second software cell with the DMA command being the status reply command, and transmits the generated second software cell to the information processing apparatus 1. Upon receiving the second software cell, the capability interchanging program acquires the above-referenced data of Fig. 6 contained in the second software cell and thus acquires the device information of the other information processing apparatus.

The capability interchanging program expands the area storing the device information table on the main memory 12, and stores the device information of the other information processing apparatus in the expanded area as the capability interchanging program stores the device information of own information processing apparatus 1. More specifically, the device information table of the information processing apparatus 1 of Fig. 6 and the device information table of the other information processing apparatus of Fig. 6 are stored in the expanded area. As shown in Fig. 7, the device information table of the information processing apparatuses 1 through 4 is stored in the expanded area.

If the information processing apparatus 1 operates as a slave apparatus, the capability interchanging program acquires the device information of the information processing apparatus functioning as a master apparatus from among the information processing apparatuses connected to the network 51, and then stores the device information onto the main memory 12.

The capability interchanging program acquires the device information of a new information processing apparatus when receiving from the master/slave manager the network status change notice that the new information processing apparatus has been connected to the network 51. On the other hand, the capability interchanging program deletes the device information of another information processing apparatus from the main memory 12 when receiving from the master/slave manager the network status change notice that the other information processing system has been disconnected from the network 51 or the network status change notice that the other information processing apparatus is switched off.

The four information processing apparatuses 1 through 4 connected to the network 51 of Fig. 7 are switched on, and perform a series of process steps. The information processing apparatuses 1 through 4 then function as the single virtual information processing apparatus 61.

The single virtual information processing apparatus 61 composed of the information processing apparatuses 1 through 4 connected to the network 51 performs a predetermined function program. This process is described below.

The function program refers to a program by which predetermined information processing apparatuses including the single virtual information processing apparatus 61 present functions to a user. For example, the function programs include a program for recording and playing back video and audio, and a program for searching recorded data for predetermined video data.

Software programs containing the functions programs in the predetermined information processing apparatuses including the single virtual information processing apparatus 61 are shown Fig. 8. Fig. 8 illustrates a variety of programs, categorized by function and feature, loadable to the main memory 12 of any of the information processing apparatuses 1 through 4.

As shown in Fig. 8, the software programs, if categorized, include three types, namely, a device driver, a control program, and a function program.

The device driver includes a program controlling exchanging of a variety of information between each of the programs of Fig. 8 and hardware units (not shown). For example, as shown in Fig. 8, the device driver includes a broadcast receiving program for controlling exchange of a variety of information with a television receiving antenna for receiving broadcast signals, a monitor outputting program for controlling exchange a variety of information with a predetermined monitor display, a bit stream program for controlling exchange a variety of information with a removable recording medium such as a DVD-RW (digital versatile disk rewritable), a DVD+RW (digital versatile disk plus rewritable), and a network input and output program for controlling exchange of a variety of information with another information processing apparatus connected to the network 51.

The control programs further include a resource manager in addition to the capability interchanging program and the master/slave manager.

The resource manager controls the sub-processor of own information processing apparatus. As shown in Fig. 7, for example, the resource manager controls the sub-processor 24 present in any of the information processing apparatuses 1 through 4 to exchange management information of the sub-processor 24 with the other information processing apparatus.

The control of the resource manager over the sub-processor 24 includes transfer of program data, startup of a program, suspension of the program, and reception of the program execution results.

The resource manager also performs communication control. In the communication control the resource manager controls communications with the other information processing apparatuses connected to the network 51, and inquires of availability of the sub-processor 24 in the other information processing apparatus and exchanges data.

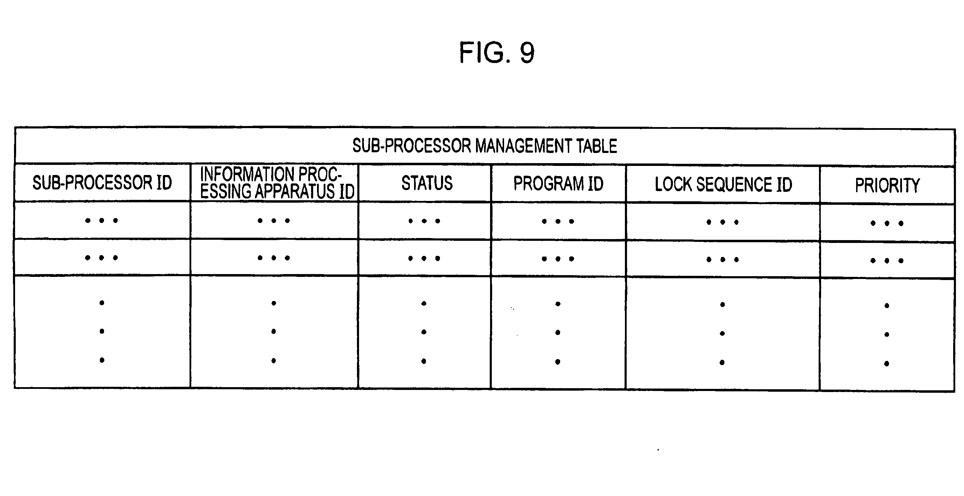

The management information of the sub-processor 24 refers to a variety of information described in the sub-processor management table of Fig. 9. Fig. 9 shows the sub-processor management table produced by the resource manager.

The resource manager manages each sub-processor using the sub-processor management table. The sub-processors herein include the sub-processor of own information processing apparatus and the sub-processors of the other information processing apparatuses acquired in the communication control. As shown in Fig. 7, the resource manager of the information processing apparatus 1 manages the sub-processor 24 of own apparatus and the sub-processors of the information processing apparatuses 2 through 4.

Each row of the sub-processor management table corresponds to a predetermined sub-processor. A sub-processor ID, an information processing apparatus ID, and a status in the sub-processor management table correspond to the sub-processor IDk (k is any integer value within a range of 1 through m as shown in Fig. 1), the information processing apparatus ID, and the sub-processor status, respectively, in the device information table of Fig. 6. The ID of a function program, currently being executed or planned to be executed by a sub-processor corresponding to the row, is described in the program ID. A value indicative of the sequence locked by the sub-processor corresponding to the row is described in a lock sequence ID item. The priority of the sub-processor corresponding to the row from among all sub-processors managed in the sub-processor management table is described in a priority item.

Returning to Fig. 8, the function programs include a program for performing a predetermined function to be presented to the user.

A series of processes relating to the above-referenced software cell, including the production of the software cell, and exchanging the software cell with another information processing apparatus, is performed by the control programs containing the capability interchanging program and the resource manager, after all. The software cell contains the function programs as the major programs.

The information processing apparatuses 1 through 4 of Fig. 7 connected to the network 51 need to pre-store the control programs.

Since the information processing apparatuses 1 through 4 communicates with each other via the network 51, the network input and output program in the device driver also needs to be pre-stored.

It is not necessary for all of information processing apparatuses 1 through 4 to store the other programs, such as the function programs.

There are times when one of the information processing apparatuses 1 through 4 storing the function programs cannot execute the function programs. For example, the information processing apparatus cannot perform the function program when the device driver controlling exchange of data for use in the function program is not stored in that information processing apparatus.

Even if an information processing apparatus can execute the function program stored therewithin, that information processing apparatus is not always an appropriate information processing apparatus to execute the function program. An information processing apparatus storing the function program does not always match the function program.

The function program is appropriately performed by causing the four information processing apparatuses 1 through 4 connected to the network 51 as shown in Fig. 7 to function as the single virtual information processing apparatus 61. More specifically, appropriate one from among the information processing apparatuses 1 through 4 forming the single virtual information processing apparatus 61 performs the function program.

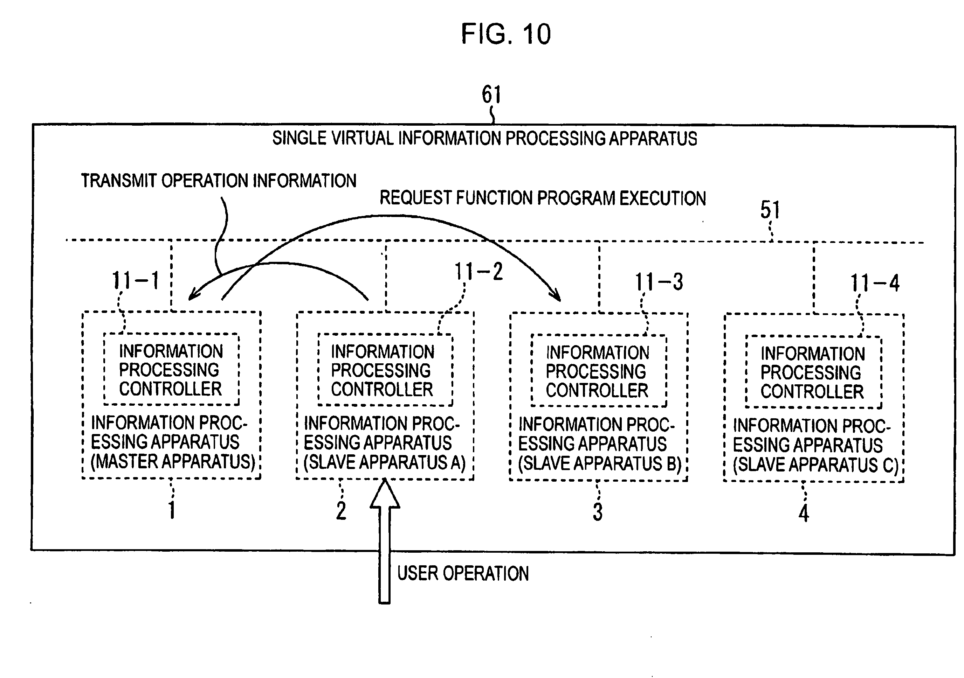

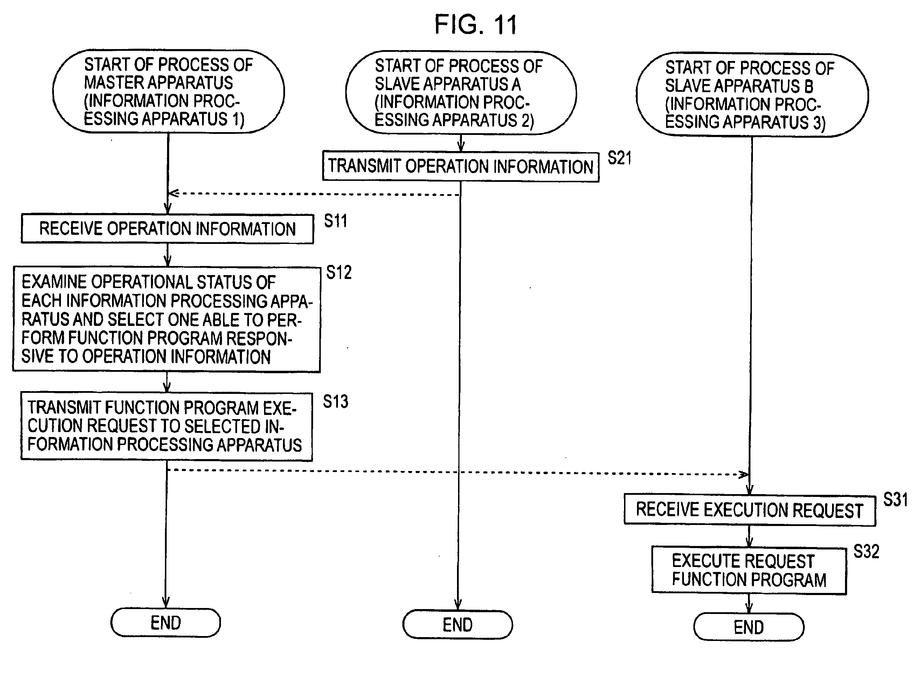

The single virtual information processing apparatus 61 performs a predetermined function program. Such an operation is described further in detail below with reference to Figs. 10 and 11. Fig. 10 illustrates the structure of and information flow in the single virtual information processing apparatus 61 that executes the predetermined function program. Fig. 11 is a flowchart of the operation of the single virtual information processing apparatus 61.

As shown in Fig. 10, the information processing apparatus 1 of the single virtual information processing apparatus 61 functions as a master apparatus. The information processing apparatuses 2 through 4 function as slave apparatuses. Within the discussion with reference to Figs. 10 and 11, the information processing apparatuses 1 through 4 are referred to as a master apparatus, a slave apparatus A, a slave apparatus B, and a slave apparatus B, respectively.

The master apparatus learns the usage status of the slave apparatuses A through C.

When the user operates a predetermined information processing apparatus, regardless of whether the information processing apparatus is a master apparatus or a slave apparatus, the master apparatus is notified of operation information.

As shown in Fig. 10, the user operates the slave A. In step S21 of Fig. 11, the slave A transmits the operation information to the master apparatus. More precisely, the slave A generates a software cell containing the operation information, and transmits the software cell to the master apparatus. The slave A ends the process thereof.

The main processor 21 in the master apparatus receives the operation information in step S11, examines the operational status of each information processing apparatus, and selects an information processing apparatus enabled to perform the function program responsive to the operation information in step S12.

The function program responsive to the operation information received in step S11 is now stored in the master apparatus. The main processor 21 acquires a variety of information relating to the function program, such as the main processor usage ratio, the sub-processor usage ratio, and the external recorder usage ratio.

The main processor 21 in the master apparatus examines the operational status of each information processing apparatus, based on the device information of the information processing apparatuses stored in the main memory 12, namely, based on the descriptive values of the device information table of Fig. 6 for each information processing apparatus.

The main processor 21 in the master apparatus selects an information processing apparatus determined as being appropriate for running the function program, based on the variety of information relating to the function program and the operational status of the information processing apparatuses. The main processor 21 in the master apparatus can select own apparatus, but here instead selects the slave B.

In step S13, the master apparatus transmits a function program execution request to the slave B selected in step S12.

The master apparatus updates the descriptive values in the device information table for the selected slave B, taking into consideration the usage ratio of the main processor to be used in the function program, the sub-processor usage ratio, and the external recorder used capacity. The master apparatus ends the process thereof. Subsequent to step S32, the master apparatus updates the descriptive values in the device information table for the slave B.

Upon receiving an execution request from the master apparatus in step S31, the slave B executes the function program requested in step S32.

The slave B ends the process thereof after transmitting an end notice to the master apparatus subsequent to the end of the function program. Upon receiving the end notice, the master apparatus updates the descriptive value in the device information table for the slave B as previously described.

Since the function program is stored in the master apparatus (not stored in the slave B), the master apparatus generates a software cell containing the function program as the program and the kick command as a DMA command, and transmits the generated software cell to the slave B in step S13.

Upon receiving the software cell in step S31, the slave B executes the function program contained in the software cell in step S32.

If the function program is stored in the slave B, the master apparatus generates a software cell containing, as a DMA command, a function program execution command for executing the function program, and transmits the generated software cell to the slave B in step S13.

The slave B receives the software cell in step S31. In step S32, the main processor 21 in the slave B loads the function program pre-stored in the recorder 13 of own apparatus onto the main memory 12 in accordance with the function program execution command contained in the software cell, and executes the function program.

As described above with reference to Figs. 10 and 11, the slave B of the single virtual information processing apparatus 61 executes the function program.

In the single virtual information processing apparatus 61, the information processing apparatuses 1 through 4 execute function programs in parallel and independently.

For example, any number of the information processing apparatuses 1 through 4 may execute the function programs of predetermined processes in the function pipeline process in parallel and independently.

In the function pipeline process, a plurality of function blocks perform predetermined processes on data of one unit independently and in a self-contained manner. The sequence of the processes (tasks) performed by the plurality of function blocks is predetermined. Each time a first function block receives data of one unit, the plurality of function blocks perform the processes on the data in the above-mentioned sequence.

In one function pipeline process shown in Fig. 12, ten blocks Pa1 through Pa10 successively perform the respective processes (tasks) on the data of predetermined number of units in the sequence. A function block Paq (q is any number from 1 to 10) performs a predetermined process on the data each time the data is input, in a self-contained and independent of the other blocks, and then outputs the resulting data to a subsequent function block Paq+1 or to the outside.

Each of the processes or tasks of the function blocks Pa1 through Pa10 is now assigned to one sub-processor 24. In other words, a single sub-processor 24 performs one of the processes assigned to the function blocks Pa1 through Pa10. Of the information processing apparatuses 1 through 4 forming the single virtual information processing apparatus 61, the information processing apparatus 2 contains five sub-processors 24, and the information processing apparatus 3 contains five sub-processors 24.

The sub-processors 24-1 through 24-5 in the information processing apparatus 2 perform the processes of the function blocks Pa1 through Pa5, respectively, and the sub-processors 24-1 through 24-5 in the information processing apparatus 3 perform the processes of the function blocks Pa6 through Pa10, respectively. The function pipeline process of Fig. 12 is thus performed.

More specifically, the main processor 21 in the information processing apparatus 2 supplies data of one unit to the sub-processor 24-1.

The sub-processor 24-1 performs the process of the function block Pa1 on the supplied data of one unit, and then supplies the processed data of one unit to the sub-processor 24-2. The sub-processor 24-2 performs the process of the function block Pa2 onto the supplied data of one unit, and then outputs the processed data of one unit to the sub-processor 24-3. The sub-processor 24-3 performs the process of the function block Pa3 on the supplied data of one unit, and then outputs the processed data of one unit to the sub-processor 24-4. The sub-processor 24-4 performs the process of the function block Pa4 on the supplied data of one unit, and then outputs the processed data of one unit to the sub-processor 24-5. The sub-processor 24-5 performs the process of the function block Pa5 on the supplied data of one unit, and outputs the processed data of one unit to the main processor 21.

The main processor 21 in the information processing apparatus 2 generates a software cell containing the data of one unit, and transmits the generated software cell to the information processing apparatus 3 via the network 51.

Each time data of one unit is supplied, the information processing apparatus 2 sequentially performs the above-referenced processes. In other words, the process of the information processing apparatus 2 is a partial process performed by the function block Pa5 through Pa5 out of the function pipeline process of Fig. 12.

Upon receiving the software cell from the information processing apparatus 2, the main processor 21 in the information processing apparatus 3 supplies the data of one unit contained in the software cell to the front-end sub-processor 24-1 thereof.

The sub-processor 24-1 performs the process of the function block Pa6 on the supplied data of one unit, and then supplies the processed data of one unit to the sub-processor 24-2. The sub-processor 24-2 performs the process of the function block Pa7 onto the supplied data of one unit, and then outputs the processed data of one unit to the sub-processor 24-3. The sub-processor 24-3 performs the process of the function block Pa8 on the supplied data of one unit, and then outputs the processed data of one unit to the sub-processor 24-4. The sub-processor 24-4 performs the process of the function block Pa9 on the supplied data of one unit, and then outputs the processed data of one unit to the sub-processor 24-5. The sub-processor 24-5 performs the process of the function block Pa10 on the supplied data of one unit, and outputs the processed data of one unit to the main processor 21.

The main processor 21 in the information processing apparatus 3 output the supplied data of one unit to the outside. The data output from the main processor 21 in the information processing apparatus 3 includes recording data onto the recorder 13, recording data onto the removable recording medium 18 via the drive 15, presenting data to the user via the UI unit 16, and transmitting data to another information processing apparatus via the communication unit 17 (for example, returning data to the information processing apparatus 2).

Each time the data of one unit is supplied, in other words, each time the software cell containing the data of one unit is received from the information processing apparatus 2, the information processing apparatus 3 successively performs the above-referenced series of process steps. The process of the information processing apparatus 3 is a partial process of the function pipeline process of Fig. 12, i.e., a process performed by the function blocks Pa6 through Pa10.

As described above, the information processing apparatus 2 performs the partial process by the function blocks Pa1 through Pa5, and the information processing apparatus 3 performs the partial process by the function blocks Pa6 through Pa10. The function pipeline process of the function blocks Pa1 through Pa10 of Fig. 12 is thus performed.

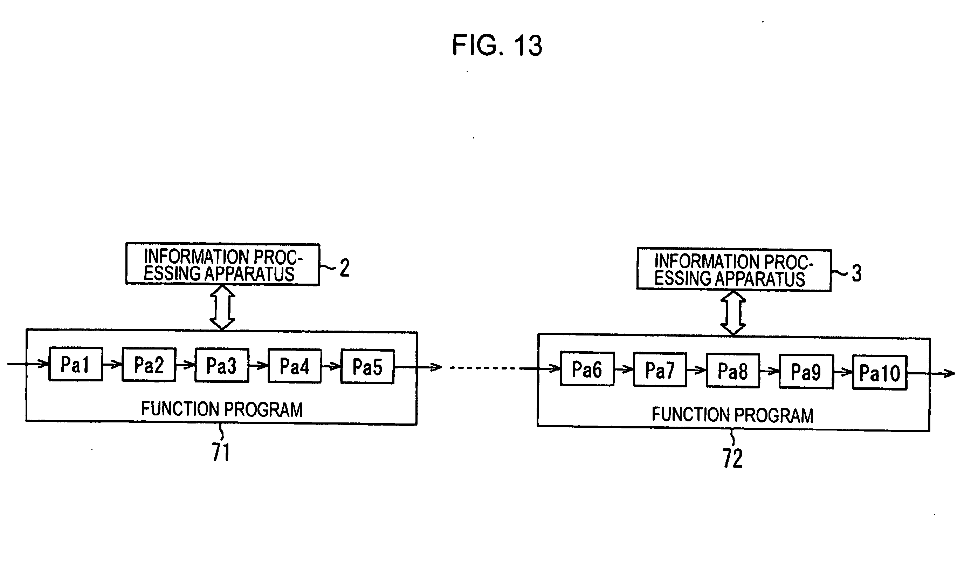

In other word, as shown in Fig. 13, the information processing apparatus 2 performs a function program 71 for the partial program by the function blocks Pa1 through Pa5, and the information processing apparatus 3 performs a function program 72 for the partial program by the function blocks Pa6 through Pa10. The function pipeline process of Fig. 12 is thus performed.

When the function pipeline process is performed by two or more information processing apparatuses, a transfer route of the data is referred to a path. The path can also be interpreted as a sequence order of at least two information processing apparatuses. As shown in Fig. 13, the path can be expressed by the sequence order of "the information processing apparatus 2 → the information processing apparatus 3".

In the known art, the path is fixed, and in the example of Fig. 13, the path of "the information processing apparatus 2 → the information processing apparatus 3" is fixed.

Of the information processing apparatuses 1 through 4 forming the single virtual information processing apparatus 61, the information processing apparatus 4 includes five sub-processors 24. The function pipeline process of Fig. 12 can be performed even if the information processing apparatus 2 performs the function program 71 and the information processing apparatus 4, instead of the information processing apparatus 3, performs the function program 72, although such an arrangement is not shown in Fig. 13. In this case, "the information processing apparatus 2 → the information processing apparatus 4" becomes the path.

There are times when the function pipeline process can be performed faster in the currently unused path of "the information processing apparatus 2 → the information processing apparatus 4" than the currently used fixed path of "the information processing apparatus 2 → the information processing apparatus 3". Such performance difference may be due to the load efficiency of the processors in the information processing apparatuses 3 and 4, and the limitation imposed on the band in the network 51.

The fixed path of "the information processing apparatus 2 → the information processing apparatus 3" is always used in the known art, and the process speed of the function pipeline process is thus limited.

The information processing apparatus 3 includes five sub-processors 24-1 through 24-5 (eight sub-processors in the case to be discussed later). If one of the five sub-processors 24-1 through 24-5 becomes unusable due to an interrupt, the execution of the function pipeline process is suspended in the fixed path of "the information processing apparatus 2 → the information processing apparatus 3".

In the technique of an embodiment of the invention, at least two path candidates of the function pipeline process are produced based on the information relating to the number of available processors in at least three information processing apparatuses. The function pipeline process is performed using individually at least two path candidates, a path candidate that has provided the function pipeline process results at the fastest speed is set as a path candidate to be used from now on (hereinafter referred to as an authorized path), and the function pipeline process is performed hereinafter using the authorized path.

When the single virtual information processing apparatus 61 of Fig. 7 performs the function pipeline process using this technique, a process of Fig. 14 is performed instead of the process of Fig. 11. Fig. 14 is a flowchart of the single virtual information processing apparatus 61 that performs the function pipeline process, or more precisely, the function program for the function pipeline process.

In the process of Fig. 11, the function program execution request is issued from the master apparatus. In the process of Fig. 14, the function program execution request for performing a predetermined partial portion of the function pipeline process is issued by a dedicated apparatus (hereinafter referred to as a process execution requesting apparatus) independent of the master apparatus and the slave apparatus. The master apparatus can be a process execution requesting apparatus as shown in Fig. 11, or one of the slave apparatuses can be a process execution requesting apparatus.

For the understanding of the difference between the process of Fig. 11 and the process of Fig. 14, the information processing apparatus 2, which is the slave A in Fig. 11, functions as the process execution requesting apparatus.

In the following discussion of the process of Fig. 14, the information processing apparatus 2 is referred to as a process execution requesting apparatus 2. The information processing apparatuses 3 and 4, which are referred to as the slave B and the slave C respectively in the discussion of Fig. 11, are referred to as other information processing apparatuses 3 and 4, respectively. The information processing apparatus 1 functions as a master apparatus.

The user operates the information processing apparatus 2 herein.

Fig. 15 is a functional block diagram of the process execution requesting apparatus 2.

The process execution requesting apparatus 2 is described below with the function block diagram of Fig. 15 before discussing the flowchart of Fig. 14.

A path candidate setter 81 sets at least two path candidates based on the number of available sub-processors 24 in the process execution requesting apparatus 2, the other information processing apparatuses 3 and 4. The master apparatus 1 notifies the path candidate setter 81 of the number of available sub-processors 24 in each of the other information processing apparatuses 3 and 4.

More specifically, the function pipeline process of Fig. 12 is now performed. The path candidate setter 81 sets, as path candidates, a path 1 of "the process execution requesting apparatus 2 → the other information processing apparatus 3" and a path 2 of "the information processing apparatus 2 → the other information processing apparatus 4" discussed with reference to Fig. 13.

The path candidate function pipeline controller 82 first performs the function pipeline process using each of at least two path candidates set by the path candidate setter 81.

In other words, the path candidate function pipeline controller 82 performs the function pipeline process of Fig. 12 using each of the paths 1 and 2.

The path candidate function pipeline controller 82 performs a control process to assign the function blocks Pa1 through Pa5 respectively to the sub-processors 24-1 through 24-5 of own process execution requesting apparatus 2, respectively. The path candidate function pipeline controller 82 further performs a control process to assign the function blocks Pa6 through Pa10 to the sub-processors 24-1 through 24-5 of the other information processing apparatus 3, respectively. Similarly, the path candidate function pipeline controller 82 performs a control process to assign the function blocks Pa6 through Pa10 to the sub-processors 24-1 through 24-5 of the other information processing apparatus 4, respectively.

More in detail, the path candidate function pipeline controller 82 assigns the function blocks Pa1 through Pa5 to the sub-processors 24-1 through 24-5 in own process execution requesting apparatus 2 by loading the function program 71 of Fig. 15 onto the main memory 12 of own apparatus.

The path candidate function pipeline controller 82 generates a software cell containing the function program 72 of Fig. 13, and transmits the generated software cell to the other information processing apparatus 3, and loads the function program 72 contained in the software cell onto the main memory 12 in the other information processing apparatus 3. The path candidate function pipeline controller 82 thus assigns the function blocks Pa6 through Pa10 to the sub-processors 24-1 through 24-5 in the other information processing apparatus 3, respectively.

The path candidate function pipeline controller 82 also transmits the software cell contained in the function program 72 of Fig. 13 to the other information processing apparatus 4, and loads the function program 72 contained in the software cell to the main memory 12 in the other information processing apparatus 4. The path candidate function pipeline controller 82 thus assigns the function blocks Pa6 through Pa10 to the sub-processors 24-1 through 24-5 in the other information processing apparatus 4.

The path candidate function pipeline controller 82 controls causing the path 1 and the path 2 to successively pass predetermined data therethrough. The path candidate function pipeline controller 82 performs the partial process from the function blocks Pa1 through Pa5 on the data of one unit, and transmits the partially processed data to each of the other information processing apparatus 3 and the other information processing apparatus 4 on a per unit basis.

The path candidate function pipeline controller 82 measures time required for the data of one unit to pass through each of the path 1 and the path 2, and notifies the authorized path setter 83 of the measurement results. The time required to pass is time required for arrival to be discussed later.

The authorized path setter 83 sets, as an authorized path, a path candidate having the shortest pass time in the notification provided by the path candidate function pipeline controller 82, namely, a path candidate through which the data has passed at the fastest speed, from among at least two path candidates set by the path candidate setter 81. In other words, the authorized path setter 83 determines, as an authorized path, a path candidate that has provided the results of the function pipeline process at the fastest speed under the control of the path candidate function pipeline controller 82.

If the pass time of the path 1 is shorter than the pass time of the path 2, the path 1 is set as an authorized path.

If the authorized path setter 83 notifies the authorized path function pipeline controller 84 of the set results, the authorized path function pipeline controller 84 performs second control to cause the data to pass through the authorized path on a per unit basis. For example, if the path 1 is set as an authorized path, the authorized path function pipeline controller 84 executes the function program 71 of Fig. 13. The authorized path function pipeline controller 84 thus performs the partial process by the function blocks Pa1 through Pa5 on a per unit data basis, and then transfers the partially processed data to the other information processing apparatus 3 contained in the path 1 on a per data unit basis.

Returning to Fig. 14, the process performed among the process execution requesting apparatus 2 having the functional structure of Fig. 15, the master apparatus 1, the other information processing apparatuses 3 and 4 is discussed below.

Steps S121 and S111 of Fig. 14 are respectively substantially identical to steps S21 and S22 of Fig. 11. In step S121, the path candidate setter 81 in the process execution requesting apparatus 2 transmits operation information to the master apparatus 1. More precisely, the path candidate setter 81 in the process execution requesting apparatus 2 generates a software cell containing the operation information, and then transmits the software cell to the master apparatus 1. In step S111, the master apparatus 1 receives the software cell.

The process up to step S111 is identical to that of Fig. 11. In other words, if the operation information received by the master apparatus 1 at this moment is a command for performing the functions other than the function pipeline process, the subsequent process of Fig. 11 is performed. In contrast, if the operation information is a command for performing the function of the function pipeline process, the following process is performed.

In step S112, the master apparatus 1 transmits an acquisition request to acquire information relating to the number of unused sub-processors to all slave apparatuses connected to the network 51, except the process execution requesting apparatus 2, namely, each of the other information processing apparatuses 3 and 4.

The other information processing apparatus 3 receives the acquisition request in step S131, and transmits, to the master apparatus 1, the information relating to the number of unused sub-processors in step S132. Similarly, the other information processing apparatus 4 receives the acquisition request in step S141, and transmits, to the master apparatus 1, the information relating to the number of unused sub-processors in step S142.

More specifically, the unused sub-processor is a sub-processor 24 that can accept a task assignment of each function block in the function pipeline process to be executed. The number of unused sub-processors is obtained by subtracting the descriptive value of the number of used sub-processors from the descriptive value of the number of sub-processors in the data of the device information of Fig. 6.

For example, the master apparatus 1 generates the software cell with both the source ID and the response destination ID being the ID of the master apparatus 1, the destination ID being the ID of the other information processing apparatus 3, and the DMA command being a status request command (see Fig. 5). In step S112, the master apparatus 1 transmits the software cell to the other information processing apparatus 3 as the acquisition request to acquire the information relating to the number of unused sub-processors.

In step S131, the other information processing apparatus 3 receives the software cell. The other information processing apparatus 3 generates a software cell with the destination ID indicating the master apparatus 1, the DMA command being a status reply command, and the data being the device information of Fig. 6. In step S132, the other information processing apparatus 3 transmits the software cell to the master apparatus 1 as the information indicating the number unused sub-processors.

Similarly, the master apparatus 1 generates a software cell with both the source ID and the response ID being the ID of the master apparatus 1, the destination ID being the other information processing apparatus 4, and the DMA command being a status request command. In step S112, the master apparatus 1 transmits the software cell to the other information processing apparatus 4 as the acquisition request to acquire the information relating to the number of unused sub-processors.

In step S141, the other information processing apparatus 4 receives the software cell. The other information processing apparatus 4 generates a software cell with the destination ID indicating the master apparatus 1, the DMA command being a status reply command, and the data being the device information of Fig. 6. In step S142, the other information processing apparatus 4 transmits the software cell to the master apparatus 1 as the information relating to the number of unused sub-processors.

While the process at the power on phase is performed on the master apparatus 1, the device information in the data of Fig. 6 about each of the master apparatus 1, the process execution requesting apparatus 2, and the other information processing apparatuses 3 and 4 is already acquired, and stored in the device information table. In this case, it is not a requirement that process steps S112, S131, S132, S141, and S142 be performed.

However, to update information relating to the number of sub-processors, steps S112, S131, S132, S141, and S142 are preferably performed.

Upon being notified of the number of unused sub-processors in the other information processing apparatus 3 in step S132, and upon being notified of the number of unused sub-processors in the other information processing apparatus 4 in step S142, the master apparatus 1 proceeds to step S113.

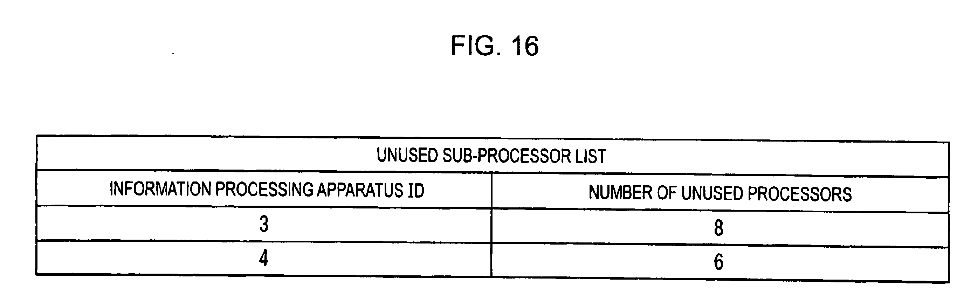

In step S113, the master apparatus 1 generates the list of unused sub-processors of Fig. 16, and transmits the list to the process execution requesting apparatus 2. The master apparatus 1 thus ends the process thereof.

Fig. 16 shows the list of the sub-processors generated by the master apparatus 1 in step S113.

The ID of the information processing apparatus, with the number of sub-processors of which each of the other information processing apparatuses 3 and 4 has notified the master apparatus 1, is described in the item of an information processing apparatus ID. The value of the information processing apparatus ID is described in the data (device information) in the software cell of Fig. 6 supplied in one of steps S132 and S142.

The number of unused sub-processors in the information processing apparatus identified by the information processing apparatus ID on the left-hand side is described in the item of the number of unused sub-processors. Described in the item of the number of unused sub-processors is the value that is obtained by subtracting the value of the number of used sub-processors from the number of sub-processors in the data (device information) of Fig. 6 in the software cell supplied in one of steps S132 and S142.

Fig. 16 shows the unused sub-processor list listing the ID of the other information processing apparatus 3 being "3" having the number of unused sub-processors being "8", and the ID of the other information processing apparatus 4 being "4" having the number of unused sub-processors being "6".

Returning to Fig. 14, the path candidate setter 81 in the process execution requesting apparatus 2 receives the unused sub-processor list in step S122. In step S123, the path candidate setter 81 generates a path selection table of Fig. 17.

Fig. 17 illustrates the path selection table generated by the path candidate setter 81 in the process execution requesting apparatus 2 in step S123.

In the unused sub-processor list, the ID of the information processing apparatus able to execute the predetermined partial portion of the function pipeline process to be performed is described in the item of the information processing apparatus ID.

The number of unused sub-processors in the information processing apparatus identified by the information processing apparatus ID on the left-hand side is described in the item of the unused sub-processors.

The information processing apparatus ID and the number of unused sub-processors of the unused processor list of Fig. 16 received in the immediately preceding step S122 are described in the item of the information processing apparatus ID and in the item of the number of unused sub-processors.

Path 1 through path 5 are path candidates of the function pipeline process, and will be described in detail later. The items of path 1 through path 5 indicate the sequence order identified by the information processing apparatus ID described on the left-hand side of the list in connection with the function pipeline process. If the items of path 1 through path 5 are blank, the information processing apparatus identified by the information processing apparatus ID is not contained in the path candidate.

Pass time or time corresponding to the pass time of each path candidate measured by the path candidate function pipeline controller 82 is described in the item of time for arrival on a per path candidate. The time for arrival will be described later with reference to Fig. 29.

Returning to Fig. 14, in step S124, the path candidate setter 81 in the process execution requesting apparatus 2 selects at least two path candidates of the function pipeline process using the path selection table generated in step S123.

The process in step S124 is hereinafter referred to as a "path selection process". The path selection process will be described in detail later with reference to a flowchart of Fig. 18.

In step S125, the path candidate function pipeline controller 82 in the process execution requesting apparatus 2 requests each of the other information processing apparatuses contained in each of at least two path candidates produced in the path selection process in the immediately preceding step S124 to execute the function program contained in the predetermined partial process of the function pipeline process. The authorized path setter 83 in the process execution requesting apparatus 2 sets, as the authorized path, the path candidate that has provided the results of the function pipeline process at the fastest speed, and notifies the authorized path function pipeline controller 84 of the set results. The authorized path function pipeline controller 84 then requests only the other information processing apparatus contained in the authorized path to execute the function program corresponding to the partial portion of the function pipeline process.

Upon receiving the request from the process execution requesting apparatus 2, the other information processing apparatus 3 executes the corresponding function program in step S133. In step S133, the other information processing apparatus 3 performs the predetermined partial portion of the function pipeline process on the data each time the data of one unit is supplied. Upon completing the partial process of one unit, the other information processing apparatus 3 supplies the processed results (the processed data of one unit) to one of the apparatuses performing a subsequent partial process and the outside. The other information processing apparatus 3 also transmits information indicating a process end (hereinafter referred to as a process end notice) to the process execution requesting apparatus 2.

Upon receiving the request from the process execution requesting apparatus 2, the other information processing apparatus 4 executes the corresponding function program in step S143. In step S143, the other information processing apparatus 4 performs the predetermined partial portion of the function pipeline process on the data each time the data of one unit is supplied. Upon completing the partial process of one unit, the other information processing apparatus 4 supplies the processed results (the processed data of one unit) to one of the apparatuses performing a subsequent partial process and the outside. The other information processing apparatus 4 also transmits the process end notice to the process execution requesting apparatus 2.

In step S125, the path candidate function pipeline controller 82 in the process execution requesting apparatus 2 notifies the authorized path setter 83 of the time for arrival corresponding to the pass time. The time for arrival extends from a predetermined point of time to a point of time at which the process end notice has been transmitted from each of the other information processing apparatuses in each of at least two path candidates, for example, to the supply timing of the process end notice from each of the other information processing apparatuses 3 and 4 in Fig. 14. As a result, the authorized path setter 83 sets, as the authorized path, the path candidate providing the shortest time for arrival. The authorized path function pipeline controller 84 in the process execution requesting apparatus 2 requests only the other information processing apparatus contained in the authorized path to execute the function program corresponding to the predetermined partial portion of the function pipeline process.

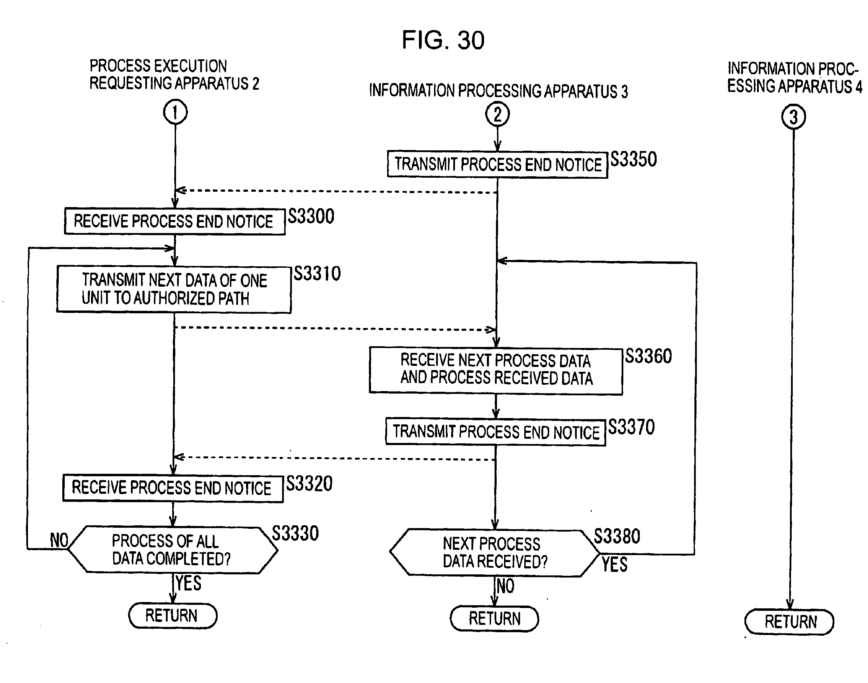

The processes performed in steps S125, S133, and S143, from among a series of process steps of the process execution requesting apparatus 2, the other information processing apparatuses 3 and 4, are hereinafter referred to as a pipeline execution process. The pipeline execution process will be described later with reference to flowcharts of Figs. 29 and 30.

The process execution requesting apparatus 2 completes the process thereof by ending the pipeline execution process in step S125. The other information processing apparatus 3 completes the process thereof by ending the pipeline execution process in step S133. The other information processing apparatus 4 completes the process thereof by ending the pipeline execution process in step S143.

The path selection process in step S124, and the pipeline execution processes in steps S125, S133, and S143 are described below step by step.

The path selection process in step S124 of Fig. 14 is described with reference to the flowchart of Fig. 18. Fig. 18 illustrates the path selection process.

The path selection process is executed by the path candidate setter 81 in the process execution requesting apparatus 2 of Fig. 15. For simplicity of explanation, the path selection process is described as being executed by the process execution requesting apparatus 2.

In step S201 of Fig. 18, the process execution requesting apparatus 2 determines a front-end information processing apparatus. The front-end information processing apparatus is the one that performs a process (task) of a front-end function block of the function pipeline process. The front-end information processing apparatus can be any information processing apparatus, and is the process execution requesting apparatus 2 herein, for example. In step S201, the process execution requesting apparatus 2 determines own apparatus as the front-end information processing apparatus.

In step S202, the process execution requesting apparatus 2 constructs, with the ID of the front-end information processing apparatus as the uppermost node, a bifurcated tree that includes all information processing apparatus IDs in the path selection table received in step S122 of Fig. 14.

The construction method of the bifurcated tree is not limited to any particular one. In accordance with the embodiments of the present invention, the following first and through fourth methods are adopted.

In the first method of the bifurcated tree construction method, left and right branch nodes are constructed with the front-end information processing apparatus as the upper most node.

Two information processing apparatus IDs corresponding to the first and second largest number of unused sub-processors in the path selection table are assigned to the two left and right branch nodes. More specifically, the left and right nodes are constructed with the front-end information processing apparatus at the upper most node, and the information processing apparatus having the first largest number of unused sub-processors and the information processing apparatus having the second largest number of unused sub-processors are assigned to the left and right branch nodes.

In a second construction method of the bifurcated tree, left and right branch nodes are further constructed under the left branch node. Two information processing apparatus IDs of the unused sub-processors having the first and second largest numbers of unused sub-processors in the path selection table are assigned to the left and right branch nodes. More specifically, the left and right branch nodes are further constructed under the left branch node, and, from among unassigned information processing apparatuses, the information processing apparatus having the largest number of unused sub-processors and the information processing apparatus having the second largest number of unused sub-processors are assigned to the left and right branch nodes.

In a third construction method of the bifurcated tree, nodes are constructed under the right branch node in a manner similar to the second method. Left and right nodes are constructed under the right branch node. Two information processing apparatus IDs of the unused sub-processors having the first and second largest numbers of unused sub-processors in the path selection table are assigned to the left and right branch nodes. More specifically, the left and right branch nodes are further constructed under the right branch node, and, from among unassigned information processing apparatuses, the information processing apparatus having the largest number of unused sub-processors and the information processing apparatus having the second largest number of unused sub-processors are assigned to the left and right branch nodes.

In a forth construction method of the bifurcated tree, the second process and the third process are performed until all information processing apparatuses (IDs) are assigned.

For example, the path selection table of Fig. 17 is used with the ID of the process execution requesting apparatus 2 as the front-end information processing apparatus being "2", and with the number of sub-processors being "5". If the first through fifth methods are performed, the bifurcated tree of Fig. 19 is constructed.

Fig. 19 illustrates the bifurcated tree constructed in step S202.

As shown in Fig. 19, each circle denotes a node. A number inside each circle represents the number of unused sub-processors in the information processing apparatus assigned to the node. A number following a character string ID next to each circle indicates the ID of the information processing apparatus assigned to the node. This discussion of the node is applied to the other bifurcated trees to be discussed later.

Returning to Fig. 18, the process execution requesting apparatus 2 constructs the bifurcated tree in step S202. In step S203, the process execution requesting apparatus 2 determines path candidates using the bifurcated tree.

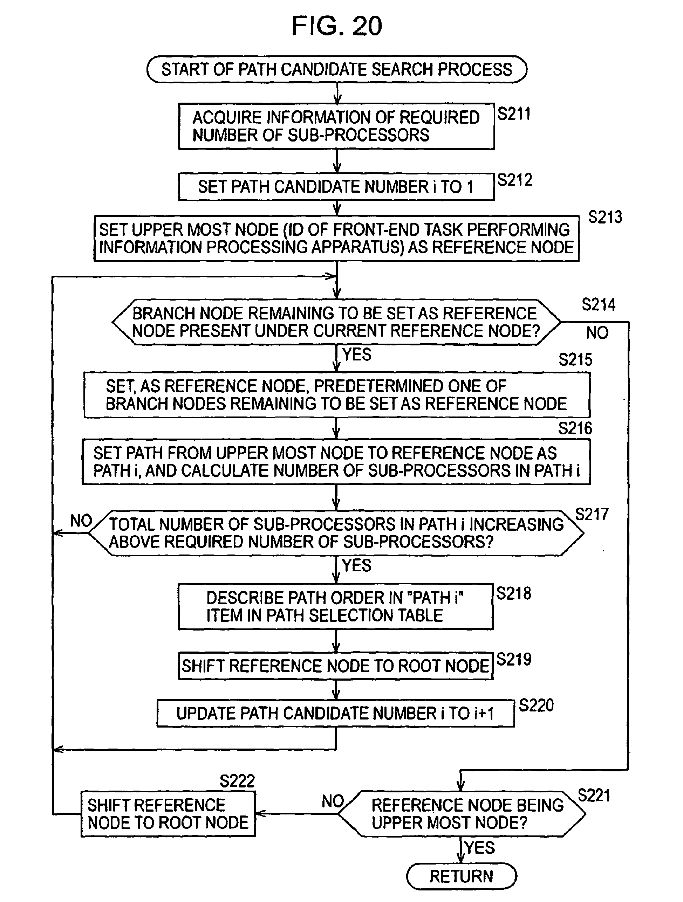

The process in step S203 is referred to as a path candidate search process. Fig. 20 illustrates in detail the path candidate search process. The path candidate search process is described below with reference to a flowchart of Fig. 20.

In step S211, the process execution requesting apparatus 2 acquires information relating to the required number of sub-processors.

The required number of sub-processors means the number of sub-processor 24 required to execute the function pipeline process. If the number of processes of the function blocks in the function pipeline process is Q (Q is two or larger integer number), and each of the Q processes of the function blocks are assigned to a single sub-processors 24. Here, Q is the required number of sub-processors. More specifically, if the function pipeline process of Fig. 12 is going to be performed, in other words, the function pipeline process of ten function blocks Pa1-Pa10 is going to be performed, the required number of sub-processors is 10.

In step S212, the process execution requesting apparatus 2 sets a path candidate number i to 1.

In step S213, the process execution requesting apparatus 2 sets the upper most node (ID of the front-end information processing apparatus 2) as a reference node. More specifically, if the bifurcated tree of Fig. 19 is set, the node of ID2 is set as the reference node in step S213.

In step S214, the process execution requesting apparatus 2 determines whether a branch node is present under the current reference node.

If it is determined in step S214 that no branch node is set under the current reference node, in other words, if it is determined that all branch nodes have already been set under the reference node, processing proceeds to step S221.

In step S221, the process execution requesting apparatus 2 determines whether the reference node is the upper most node.

A loop process of steps S214 through S220 is repeated until all nodes of the bifurcated tree are set under the reference node. As a result, the reference node is set as the upper most node in step S221. The path candidate search process then ends.

If it is determined in step S221 that the reference node is not the upper most node, processing proceeds to step S222. In step S222, the process execution requesting apparatus 2 shifts the reference node to a root node. Processing returns to step S214 to determine again whether any branch node is present under the current reference node.

Processing proceeds from step S213 to step S214, and branch nodes of ID2 as the current reference node in the bifurcated tree of Fig. 19, namely, nodes of ID3 and ID4 are not yet set in the reference node. If it is determined in step S214 that a branch node not yet set under the current reference node is present, processing proceeds to step S215.

In step S215, the process execution requesting apparatus 2 sets, as the reference node, a predetermined one of branch nodes not yet set as the reference node. More specifically, the node of ID3 of the bifurcated tree of Fig. 19 is set as the reference node in step S215.

In step S216, the process execution requesting apparatus 2 sets a path from the upper most node to the reference node in a path "i", and calculates the total number of sub-processors within the path "i". The total number within the path "i" refers to the sum of unused sub-processors in each of the information processing apparatuses contained in the path "i".

More specifically, "ID2→ID3" is set in the path 1 in step S216 as shown in Fig. 21. The number of unused sub-processors in the process execution requesting apparatus 2 having ID2 in the path 1, namely, "5" and the number of unused sub-processors in the other information processing apparatus 3 having ID3 in the path 1, namely, "8" are summed. The resulting sum "13" is thus set as the total number of sub-processors in the path 1.

Returning to Fig. 20, the process execution requesting apparatus 2 determines in step S217 whether the total number of sub-processors is equal to or above the required number of sub-processors.

If it is determined in step S217 that the total number of sub-processors within the path "i" is less than the required number of sub-processors, processing returns to step S214 to repeat step S214 and subsequent steps.

For example, the total number of sub-processors within the path "i" calculated in step S261 is "13", and the required number of sub-processors obtained in step S11 is "10". It is determined in step S217 that the total number of sub-processors is equal to or more than the required number of sub-processors, processing proceeds to step S218.

In step S218, the process execution requesting apparatus 2 describes a path sequence order in the item of the "path i" in the path selection table. The path sequence is a path sequence order of each node in the path "i" except the upper most node corresponding to the process execution requesting apparatus 2. More specifically, the path sequence order refers to a process sequence of the information processing apparatuses corresponding to the nodes except the process execution requesting apparatus 2 when the function pipeline process is performed. For example, the path sequence of the information processing apparatus that performs the function pipeline process subsequent to the process execution requesting apparatus 2 is "1".

As shown in Fig. 21, ID2 is followed by ID3 in the path 1, and the path sequence of the other information processing apparatus 3 having ID3 is "1". In step S218, "1" is described in the item of the path 1 corresponding to the information processing apparatus ID of "3", namely, at the item of the path "1" at the first row.

Returning to Fig. 20, the process execution requesting apparatus 2 sets the reference node to a root node in step S219. In step S220, the process execution requesting apparatus 2 updates the path candidate number "i" to "i+1". Processing returns to step S214 to repeat step S214 and subsequent steps.

The reference node is shifted to the upper most node of ID2 of Fig. 21, and the number "i" is updated to be 2.

If the determination in step S214 is yes, the node of ID4 is set as the reference node in step S215.

In step S216, "ID2→ ID4" is set in the path 2 as shown in Fig. 21. The number of unused sub-processors in the process execution requesting apparatus 2 having ID2 in the path 2, i.e., "5", and the number of unused sub-processors in the other information processing apparatus 4 having ID4 in the path 2, i.e., "6" are summed and the resulting sum "11" is set as the total number of sub-processors within the path 2.

The total number of sub-processors within the path 2 calculated in step S216 is "11", and the required number of sub-processors obtained in step S211 is "10". The determination in step S217 is thus yes, and processing proceeds to step S218.

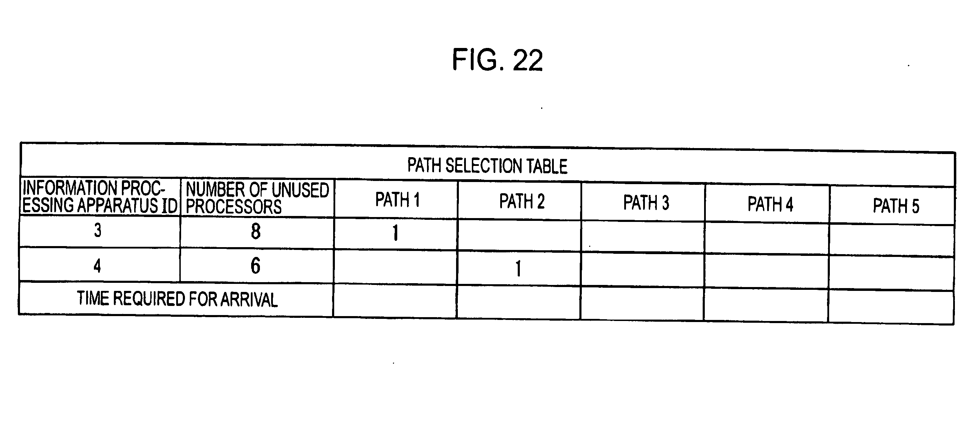

In step S218, the path sequence is described in the item of the path 2 as shown in Fig. 22. In step S219, the reference node is shifted to the node of ID2, the number "i" is updated to be 3, and processing proceeds to step S214.

Since all nodes of the bifurcated tree of Fig. 21 are set as the reference node, and the reference node is shifted to the upper node of ID2. The determination in step S214 is no, and the determination in step S221 is yes, and the path candidate search process thus ends.

The path candidate search process of Fig. 20 using the two-layered bifurcated tree shown in Figs. 19 and 21 has been discussed. The process execution requesting apparatus 2 executes a series of steps using a bifurcated tree having more layers to determine a plurality of path candidates.

For example, the path candidate search process of Fig. 20 using a three-layered bifurcated tree is described below.

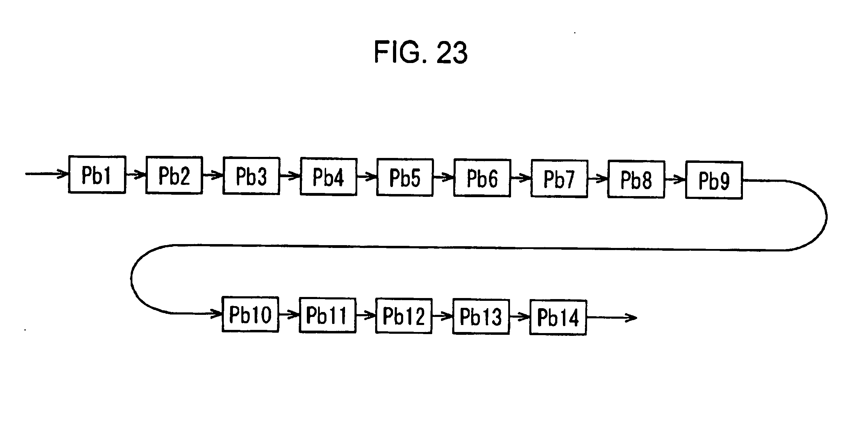

The function pipeline process formed of processes (tasks) of fourteen function blocks Pb1 through Pb14 shown in Fig. 23 is executed. The process of each of the 14 function blocks Pb1 through Pb14 is assigned to a single sub-processor 24.

It is assumed in the information processing system of Fig. 1 that seven information processing apparatuses 1 through 7 are connected to the network 51. The seven information processing apparatuses 1 through 7 are assigned 1 through 7 as respective IDs. The information processing apparatus 1 functions as a master apparatus, the information processing apparatus 2 functions as the process execution requesting apparatus 2, and the information processing apparatuses 3 through 7 function as the other information processing apparatuses 3 through 7. The numbers of unused sub-processors of the process execution requesting apparatus 2 and the other information processing apparatuses 3 through 7 are 5, 8, 6, 3, 2, and 1, respectively.

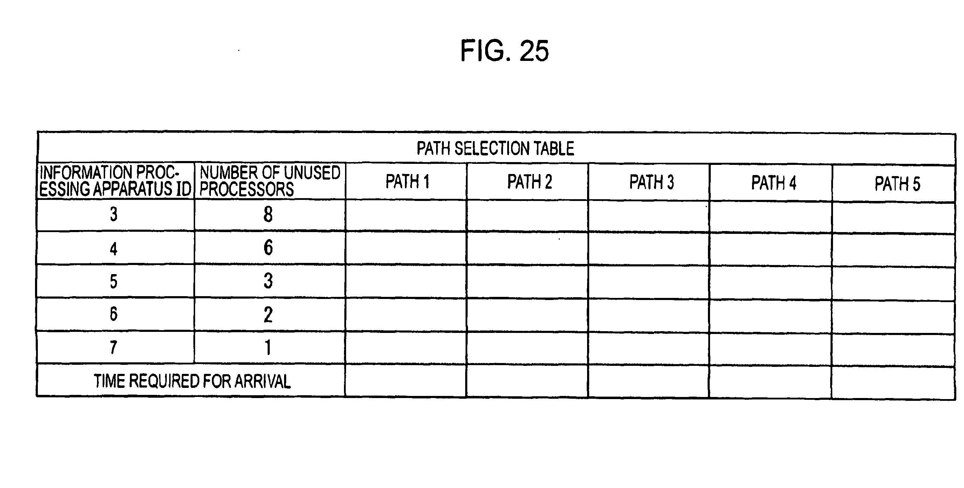

The process execution requesting apparatus 2 receives the unused sub-processor list shown in Fig. 2 from the master apparatus 1 in step S122 of Fig. 14. The process execution requesting apparatus 2 produces the path selection table of Fig. 25 in step S123, and executes the path selection process of Fig. 18 in step S124.

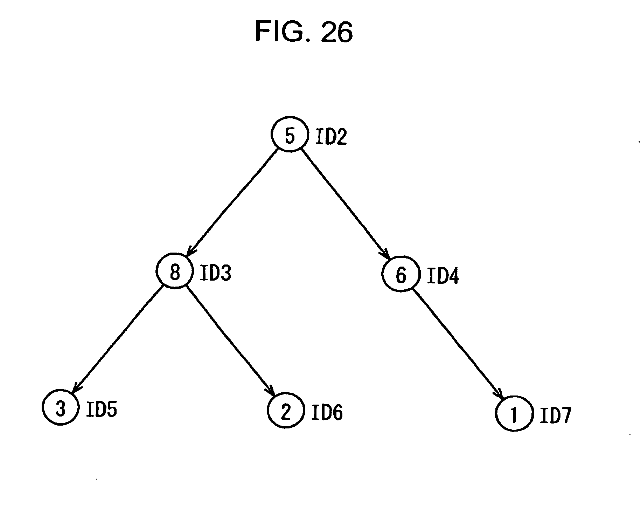

The process execution requesting apparatus 2 itself is determined as a front-end information processing apparatus in step S201. The bifurcated tree of Fig. 26 is generated in step S202. The path candidate search process of Fig. 20 is executed in step S203.

The function pipeline process of Fig. 23 is formed of the fourteen process (tasks) of function blocks Pb1 through Pb14. The required number of sub-processors acquired is "14" in step S211.

The number "i" is set to "1" in step S212. In step S213, the node of ID2 of the bifurcated tree of Fig. 26 is set as the reference node.

The determination in step S214 is yes, and the node of ID3 is set as the reference node in step S215.

In step S216, "ID2→ID3" of the bifurcated tree of Fig. 26 is set in the path 1. The number of unused sub-processors in the process execution requesting apparatus 2 having ID2 within the path 1, i.e., "5", and the number of unused sub-processors in the other information processing apparatus 3 having ID3 within the path 1, i.e., "8" are summed. The resulting sum "13" is set as the total sum of sub-processors within the path 1.

The total number of sub-processors within the path 1 calculated in step S216 is "13", and the required number of sub-processors obtained in step S211 is "14". The determination in step S217 is no, and processing returns to step S214 to repeat step S214 and subsequent steps.

More specifically, the determination in step S214 is yes, and the node of ID5 is set as the reference node in step S215.

In step S216, "ID2→ ID3→ID5" of the bifurcated tree of Fig. 26 is set in the path 1. The number of unused sub-processors within the process execution requesting apparatus 2 having ID2 within the path 1, i.e., "5", the number of unused sub-processors in the other information processing apparatus 3 having ID3 within the path 1, i.e., "8", and the number of unused sub-processors in the other information processing apparatus 5 having ID5 within the path 1, i.e., "3" are summed. The resulting sum "16" is set as the total sub-processors within the path 1.

The total number of sub-processors within the path 1 calculated in step S216 is "16", and the required number of sub-processors obtained in step S211 is "14". The determination in step S216 is yes, and processing proceeds to step S218.

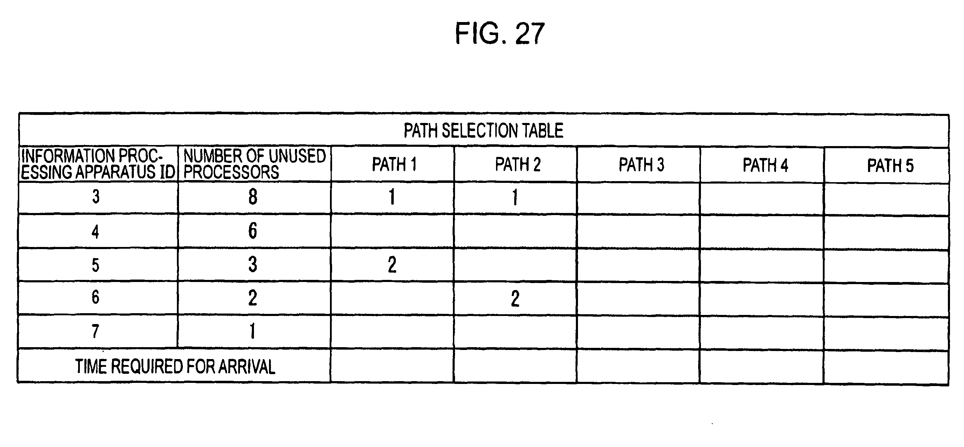

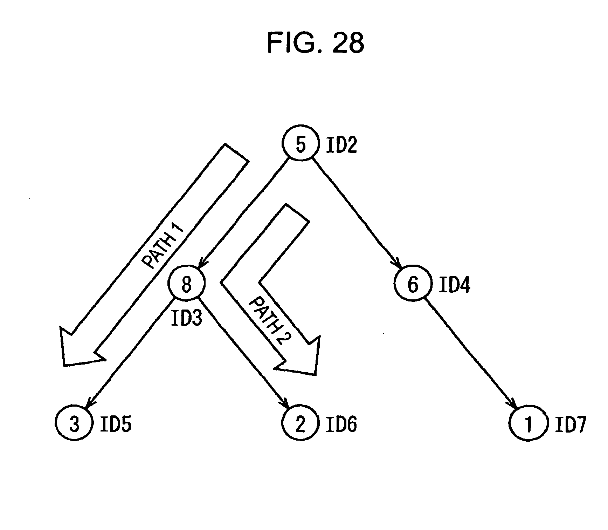

In step S218, the path sequence is described in the item of the path 1 in the path selection table as shown in Fig. 27. When the path sequence is described in the item of path 1 in the path selection table, the path 1 is determined as a path candidate as shown in Fig. 28.

The reference node is shifted to the node of ID3 in step S219, and the number "i" is updated to be 2. Processing proceeds to step S214 to repeat step S214 and subsequent steps.

More specifically, the determination in step S214 is yes, and the node of ID6 is set as the reference node in step S215.

In step S216, "ID2→ ID3→ ID6" of the bifurcated tree of Fig. 26 is set as the path 2. The number of unused sub-processors in the process execution requesting apparatus 2 having ID2 within the path 2, i.e., "5", the number of unused sub-processors in the other information processing apparatus 3 having ID3 within the path 2, i.e., "8", and the number of unused sub-processors in the other information processing apparatus 6 having ID6 within the path 2, i.e., "2" are summed. The resulting sum "15" is set as the total number of sub-processors within the path 2.

The total number of sub-processors within the path 2 calculated in step S216 is "15", and the number of sub-processors obtained in step S211 is "14". The determination in step S217 is thus yes, and processing proceeds to step S218.

In step S218, a path sequence is described in the item of the path 2 in the path selection table. When the path sequence is described in the item of the path 2 in the path selection table, the path 2 is set as a path candidate as shown in Fig. 28.

In step S219, the reference node is shifted to the node ID3, and the number "i" is updated to be 3. Processing returns to step S214 to repeat step S214 and subsequent steps.

The determination in step S214 is no because ID3 is a reference node with branch modes ID5 and ID6 under ID3 already set as the reference node. The determination in step S221 is no, and the node of ID2 is set as the reference node in step S222. Processing returns to step S214.

The determination in step S214 is yes, and the node of ID4 is set as the reference node in step S215.

In step S216, "ID2→ID4" of the bifurcated tree of Fig. 26 is set as a path 3. The number of unused sub-processors in the process execution requesting apparatus 2 having ID2 within the path 3, i.e., "5", and the number of unused sub-processors in the other information processing apparatus 4 having ID4 within the path 3, i.e., "6" are summed. The resulting sum "11" is set as the total number of sub-processors within the path 3.

The total number of sub-processors within the path 3 calculated in step S216 is "11", and the required number of sub-processors obtained in step S211 is "14". The determination in step S217 is no, and processing returns to step S214 to repeat step S214 and subsequent steps.

More specifically, the determination in step S214 is yes, and the node of ID7 is set as the reference node in step S215.

In step S261, "ID2→ ID4→ ID7" of the bifurcated tree of Fig. 26 is set as the path 3. The number of unused sub-processors in the process execution requesting apparatus 2 having ID2 within the path 3, i.e., "5", the number of unused sub-processors in the other information processing apparatus 4 having ID4 within the path 3, i.e., "6", and the number of unused sub-processors in the other information processing apparatus 7 having ID7 within the path 3, i.e., "1" are summed. The resulting sum "12" is set as the total number of sub-processors within the path 3.

The total number of sub-processors within the path 3 calculated in step S216 is "12", and the required number of sub-processors obtained in step S211 is "14". The determination in step S217 is no, and processing returns to step S214 to repeat step S214 and subsequent steps.

More specifically, since ID7 at the lower most node is set as a reference node, the determination in step S214 is no. The determination in step S221 is no, and the reference node is shifted to ID4 in step S222. Processing returns to step S214.

Currently, ID4 is at the reference node. Since branch node ID7 under ID4 has already been set as the reference node, the determination in step S214 is no. The determination in step S221 is no, and the reference node is shifted to ID2 in step S222. Processing returns to step S214.

The reference node is shifted to ID2 at the upper most node. All nodes contained in the bifurcated tree of Fig. 26 have already been set as a reference node. The determination in step S214 is no, and the determination in step S221 is yes. The path candidate search process thus ends.

The total number of sub-processors within the path 3 is "12" less than the required number of sub-processors of "14". The function pipeline process of Fig. 23 is impossible to perform with the path 3. As shown in Fig. 28, the path 3 is not adopted as a path candidate. The item of the path 3 is thus left blank in the path selection table.

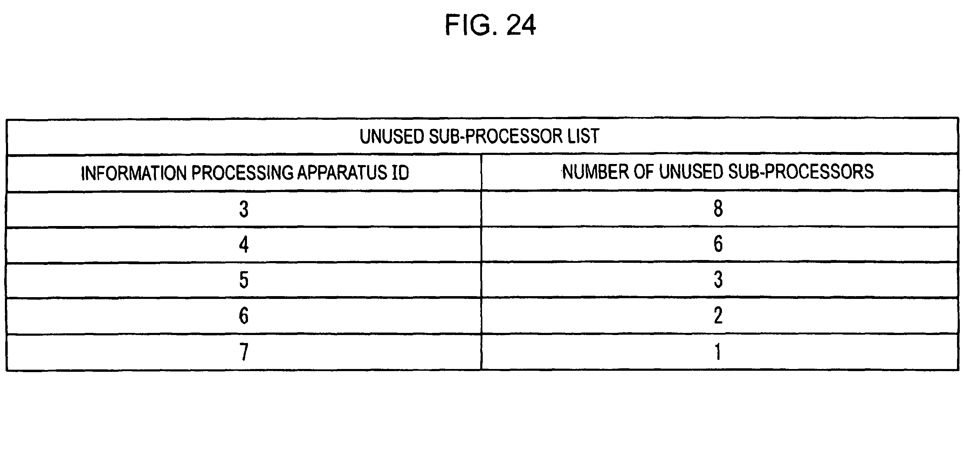

The path selection process in step S124 of Fig. 14 has been discussed with reference to Figs. 18 through 28.

In step S202 of Fig. 18, the bifurcated tree has been constructed. It is also possible to construct an M-branched tree (M is an integer not less than 2). The bifurcated tree in this embodiment is preferred in view of a process to construct a tree and a simplification of a subsequent process to use the tree (for high-speed operation).

When the path selection process in step S124 is completed as shown in Fig. 14, the pipeline execution process in steps S125, S133, and S143 is executed. The pipeline execution process is described in detail with reference to flowcharts of Figs. 29 and 30.

In step S3210 of Fig. 29, the path candidate function pipeline controller 82 in the process execution requesting apparatus 2 of Fig. 15 transmits the function programs to corresponding information processing apparatuses from among the other information processing apparatuses contained in each of the path candidates determined in the path selection process in step S124.

The function pipeline process of Fig. 12 is actually performed as the pipeline execution process, and the path selection table of Fig. 22 is used.

As shown in Fig. 21, the path 1 of "the process execution requesting apparatus 2 having ID2 → the other information processing apparatus 3 identified by ID3" and the path 2 of "the process execution requesting apparatus 2 having ID2 → the other information processing apparatus 4 having ID4" are set as the path candidates. The destinations of the function program in step S3210 are the other information processing apparatus 3 and the other information processing apparatus 4.

Since the unused sub-processors in the process execution requesting apparatus 2 is "5", the partial process of the function blocks Pa1 through Pa5 of the function pipeline process of Fig. 12 is executed by the process execution requesting apparatus 2, and the partial process of the function blocks Pa6 through Pa10 is executed by one of the other information processing apparatuses 3 and 4. The function pipeline process of Fig. 12 is thus performed.

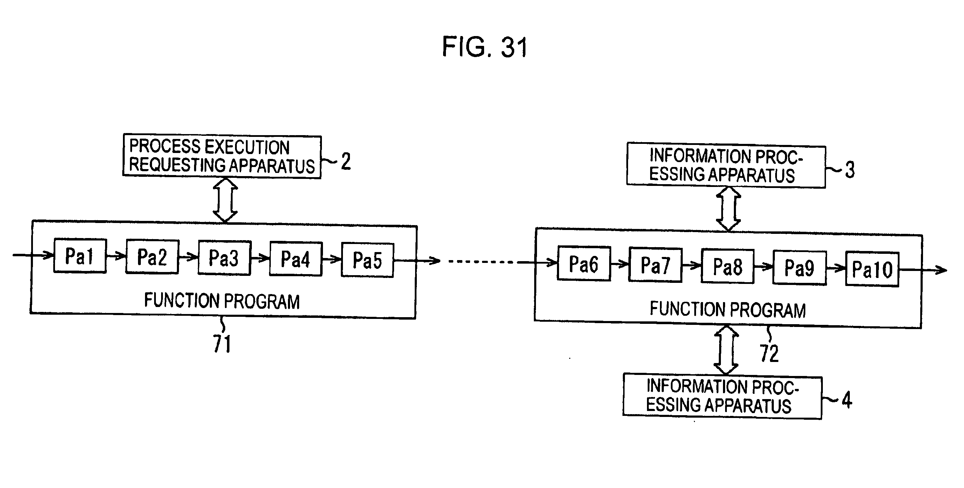

The path candidate function pipeline controller 82 in the process execution requesting apparatus 2 prepares the function program 71 and the function program 72 of Fig. 31 in step S3210. The path candidate function pipeline controller 82 loads the function program 71 onto the main memory 12 of own apparatus. The path candidate function pipeline controller 82 transmits the function program 72 to each of the other information processing apparatuses 3 and 4 via the network 51. More specifically, the path candidate function pipeline controller 82 in the process execution requesting apparatus 2 generates a software cell containing the function program 72, and transmits the software cell to each of the other information processing apparatuses 3 and 4 via the network 51.

The function program 71 and the function program 72 are respectively identical to those discussed with reference to Fig. 13, and the discussion thereof is omitted herein.

In step S3310, the other information processing apparatus 3 receives the function program 72 and loads the function program 72 in the main memory 12 of own apparatus. More specifically, the other information processing apparatus 3 receives the software cell, and loads the function program 72 contained in the software cell to the main memory 12 of own apparatus.

In step S3410, the other information processing apparatus 4 receives the function program 72, and loads the received function program 72 onto the main memory 12 of own apparatus. More specifically, the other information processing apparatus 4 receives the software cell, and loads the function program 72 contained in the software cell to the main memory 12 of own apparatus.

The path candidate function pipeline controller 82 in the process execution requesting apparatus 2 starts processing data of a predetermined unit in step S3220. For example, the path candidate function pipeline controller 82 in the process execution requesting apparatus 2 executes the function program 71 of Fig. 31, and starts performing the partial process of the function blocks Pa1 through Pa5 on input data on a per predetermined unit. The predetermined unit refers to a frame or a field if the input data is video data.

The path candidate function pipeline controller 82 in the process execution requesting apparatus 2 transmits first process data of one unit to each of the path candidates in step S3230.

The transmission of the data to the path candidate means the transmission of the data to the other information processing apparatus having the path sequence "1" in the item of the path "i" in the path selection table in the path selection process in step S124 of Fig. 14. Since the path selection table of Fig. 22 is used, the first process data of one unit is transmitted to each of the other information processing apparatuses 3 and 4 in step S3230. The software cell containing the first process data of one unit is generated, and the software cell is transmitted to each of the other information processing apparatuses 3 and 4.

The process data of one unit means data first output from the function block Pa5 when the data is successively input to the function block Pa1 of Fig. 31 on a per unit basis. For example, if the input data is video data, the data of one of a first frame and a first field is the first process data of one unit.

When the first process data of one unit is transmitted from the process execution requesting apparatus 2 in step S3230, the other information processing apparatus 3 receives the first process data of one unit in step S3320. The other information processing apparatus 3 executes the function program 72 of Fig. 31, thereby performing the partial process of the function blocks Pa6 through Pa10 on the first process data of one unit.

Similarly, the other information processing apparatus 4 receives the first process data of one unit in step S3420, and performs the process on the first process data of one unit. More specifically, the other information processing apparatus 4 performs the function program 72 of Fig. 31, thereby performing the partial process of the function blocks of Pa6 through Pa10 on the first process data of one unit.

It is assumed that the other information processing apparatus 3 now completes the process on the first process data earlier than the other information processing apparatus 4. In other words, the data from the function block Pa10 is now output faster the other information processing apparatus 3 than from the other information processing apparatus 4.

In step S3330, the other information processing apparatus 3 transmits the process end notice to the process execution requesting apparatus 2 earlier than the other information processing apparatus 4 (see step S3430).

In step S3240, the path candidate function pipeline controller 82 in the process execution requesting apparatus 2 receives the process end notice from the other information processing apparatus 3 and notifies the authorized path setter 83 of the reception of the process end notice.

Upon receiving the process end notice, the authorized path setter 83 sets, as an authorized path, in step S3250 the path candidate, the process end notice of which has reached first.

The path candidate, the process end notice of which has reached first, is the one including the other information processing apparatus as the transmission source from which the process end notice has reached first. More specifically, the process end notice has reached first from the other information processing apparatus 3. The path candidate corresponding to the path 1 in the path selection table of Fig. 22, namely, the path 1 of "the process execution requesting apparatus 2 having ID2 → the other information processing apparatus 3 having ID3" of Fig. 21 becomes the path candidate resulting in the first arrived process end notice. The path 1 is thus set as the authorized path in step S3250.

The authorized path setter 83 sets the authorized path, and notifies the authorized path function pipeline controller 84 of the set results. The authorized path function pipeline controller 84 transmits the process data of one unit to the authorized path. The transmission of the process data to the authorized path means the transmission of the data to the other information processing apparatus with the path sequence of "1" set in the item of the path "i" that is set as an authorized path in the path selection table.

The path selection table of Fig. 22 is used, and the path 1 is set as the authorized path. The process data of subsequent units is transmitted to only the other information processing apparatus 3.

In step S3260, the authorized path function pipeline controller 84 in the process execution requesting apparatus 2 transmits the next process data of one unit to the authorized path, namely, to the other information processing apparatus 3.

In step S3270, the path candidate function pipeline controller 82 in the process execution requesting apparatus 2 describes the time for arrival for the authorized path in the item of the time for arrival in the path "i" corresponding to the authorized path in the path selection table. For example, the time for arrival of the path 1 is described in the time for arrival of the path 1 in the path selection table.

The time for arrival in this case is a length of time from a point of time of transmission of the first process data of one unit to a point of time of reception of the process end notice responsive to the transmission. In step S3270, a process time from step S3230 to step S3240 is recorded as the time for arrival.

More specifically, the path candidate function pipeline controller 82 in the process execution requesting apparatus 2 starts a time measurement operation (resets time to zero) at the moment the first process data of unit is transmitted in step S3230, and counts time at the moment the process end notice has been received in step S3240. In step S3270, the measured time is registered as the time for arrival in the path selection table.

In the pipeline execution process, the fastest path candidate is immediately set as an authorized path regardless of whether the time for arrival of the other path candidate is acquired, and the next process data is transmitted to the fastest path candidate.

Upon completing process of the first process data as shown in Fig. 29, the other information processing apparatus 4 transmits the process end notice in step S3430.

The path candidate function pipeline controller 82 in the process execution requesting apparatus 2 receives the process end notice in step S3280, and describes the time for arrival in the item of the time for arrival in the path 2 in the path selection table in step S3290.

In the pipeline execution process of Figs. 29 and 30, the process then ends between the process execution requesting apparatus 2 and the other information processing apparatus 4. In the pipeline execution process of Figs. 29 and 30, the descriptive value of the time for arrival in the path selection table is used as a reference only. In other words, it is not a requirement that steps S3270 and S3290 be performed in the pipeline execution process of Figs. 29 and 30. The time for arrival is used to update the authorized path in step S3351 in another example of the pipeline execution process of Figs. 33 and 34. Steps S3270 and S3290 are required in the pipeline execution process of Figs. 33 and 34.

The other information processing apparatus 3 contained in the path 1 as an authorized path completes a process in step S3340, and transmits a process end notice in step S3350 of Fig. 30.

The authorized path function pipeline controller 84 in the process execution requesting apparatus 2 receives a process end notice in step S3300, and transmits the next process data of one unit to the authorized path in step S3310. More specifically, the next process data of one unit is transmitted to the other information processing apparatus 3.

The other information processing apparatus 3 receives the next process data of one unit, and performs the process thereof on the received process data in step S3360. Upon completing the process, the other information processing apparatus 3 transmits a process end notice in step S3370.

Upon receiving the process end notice, the authorized path function pipeline controller 84 in the process execution requesting apparatus 2 determines in step S3330 whether all data has been processed.

If it is determined in step S3330 that all data has been processed, the pipeline execution process of the process execution requesting apparatus 2 ends.

In step S3380, the other information processing apparatus 3 determines whether next data has been received. If the process execution requesting apparatus 2 completes the pipeline execution process, no process data has been naturally received. If it is determined in step S3380 that no process data has been received, the other information processing apparatus 3 ends the pipeline execution process thereof.

If it is determined in step S3330 that all data has not been processed, processing returns to step S3310 to repeat step S3310 and subsequent steps. More specifically, next process data is transmitted to the other information processing apparatus 3 in step S3310. If it is determined in step S3380 that the next process data has been transmitted, processing returns to step S3360 to repeat step S3360 and subsequent steps.

The pipeline execution process for performing the function pipeline of Fig. 12 using the path selection table of Fig. 22 has been described with reference to Figs. 29 and 30.

The process execution requesting apparatus 2 and the like are able to perform the pipeline execution process for performing a function pipeline other than the function pipeline of Fig. 12. Figs. 29 and 30 are flowcharts illustrating such as a pipeline execution process.

The process execution requesting apparatus 2 and the other information processing apparatuses 3 through 7 can execute the pipeline execution process of the type of the function pipeline process of Fig. 23.

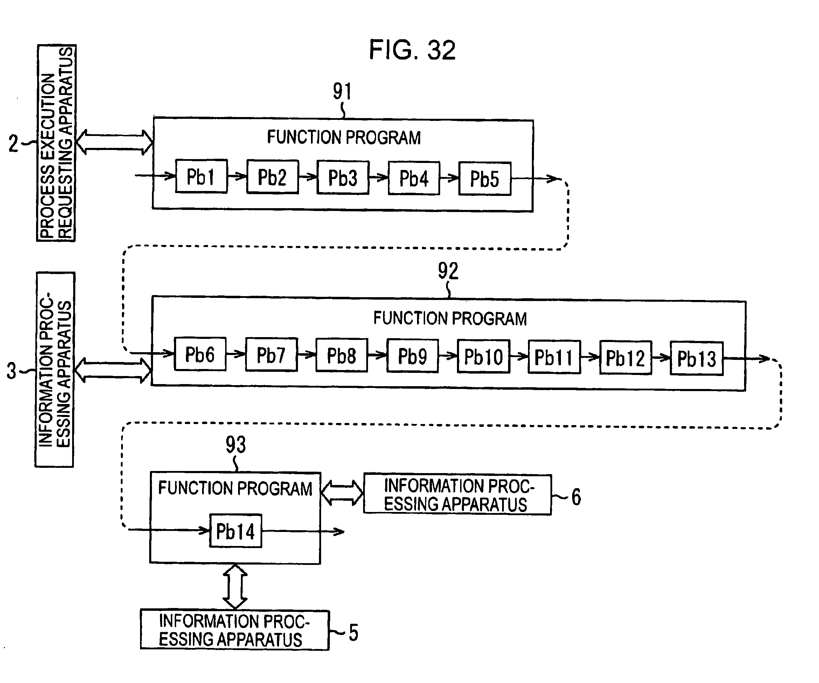

For the path selection table of Fig. 27, function programs 91 through 93 of Fig. 32 are prepared. The function program 91 performs a partial program of function blocks Pb1 through Pb5 of the function pipeline process of Fig. 23. The function program 92 performs a partial program of function blocks Pb6 through Pb13 of the function pipeline process of Fig. 23. The function program 93 performs a partial program of function block Pb14 of the function pipeline process of Fig. 23.

In step S3210 of Fig. 29, the path candidate function pipeline controller 82 in the process execution requesting apparatus 2 loads the function program 91 onto the main memory 12 of own apparatus, transmits the function program 93 to the other information processing apparatus 3, and transmits the function program 93 to each of the other information processing apparatuses 5 and 6.

The other information processing apparatus 3 receives the function program 92 and loads the received function program 92 to the main memory 12. Each of the other information processing apparatuses 5 and 6 receives the function program 93 and loads the received function program 93 to the main memory 12 of own apparatus. These process steps are not shown.

In step S3220, the path candidate function pipeline controller 82 in the process execution requesting apparatus 2 executes the function program 91, thereby performing the partial process of function blocks Pb1 through Pb5 onto the input data on a per unit basis.

The path candidate function pipeline controller 82 in the process execution requesting apparatus 2 transmits first process data of one unit to the other information processing apparatus 3 in step S3230.

The other information processing apparatus 3 executes the function program 92, thereby performing the partial process of the function blocks Pb6 through Pb13 on the first process data of one unit. The other information processing apparatus 3 transmits the first data of one unit, output from the final function block Pb13, to each of the other information processing apparatuses 5 and 6. These process steps are now shown.

The other information processing apparatus 5 performs the function program 93, thereby performing the partial process of the function block Pb14 on the first process data of one unit. Upon completing the process, the other information processing apparatus 5 transmits the process end notice to the process execution requesting apparatus 2.

The other information processing apparatus 6 executes the function program 93, thereby performing the partial process of the function block Pb14 on the first data of one unit. Upon completing the process, the other information processing apparatus 6 transmits the process end notice to the process execution requesting apparatus 2.

In step S3240, the path candidate function pipeline controller 82 in the process execution requesting apparatus 2 receives the process end notice from one of the other information processing apparatuses 5 and 6. In step S3250, the authorized path setter 83 sets, as an authorized path, the path 1 containing the other information processing apparatus 5 or the path 2 containing the other information processing apparatus 6 whichever gives the process end notice earlier.

If the process end notice has arrived from the other information processing apparatus 5 earlier, the path candidate corresponding to the path 1 in the path selection table of Fig. 27, namely, the path 1 of "the process execution requesting apparatus 2 having ID2 → the other information processing apparatus 3 having ID3 → the other information processing apparatus 5 having ID5" of Fig. 28 is set as an authorized path in step S3250.

If the path 1 is set as the authorized path, the path 1 is used to perform the function pipeline process of Fig. 23 on the data of one unit thereafter although the corresponding process is not shown. The authorized path function pipeline controller 84 control executing the function pipeline process of Fig. 23 using the path 1.

If the process end notice has arrived earlier from the other information processing apparatus 6, the path candidate corresponding to the path 2 in the path selection table of Fig. 27, namely, the path 2 of "the process execution requesting apparatus 2 having ID2→ the other information processing apparatus 3 having ID3 → the other information processing apparatus 6 having ID6" of Fig. 28 is set as an authorized path in step S3250.

If the path 2 is set as the authorized path, the path 3 is used to perform the function pipeline process of Fig. 23 on the data of one unit thereafter although the corresponding process is not shown. The authorized path function pipeline controller 84 control executing the function pipeline process of Fig. 23 using the path 2.

The pipeline execution process has been discussed with reference to Figs. 29 and 30.

The pipeline execution process in step S125 of Fig. 14 is not limited to the process flow of Figs. 29 and 30, and can take various forms.

In accordance with one embodiment, a plurality of path candidates are set in the path selection process in step S124 carried out prior to the pipeline execution process in step S125. If the authorized path can be used no longer, the authorized path can be switched to another path candidate. Such a pipeline execution process can be performed in step S125 instead of the process flow of Figs. 29 and 30.

From among the path candidates in the pipeline execution process, path candidates other than a path candidate set as an authorized path are stored as backup paths, and one of the backup paths is used as necessary. Such a pipeline execution process is performed in step S125 instead of the process flow of Figs. 29 and 30. To discriminate from the pipeline execution process of Figs. 29 and 30, this pipeline execution process is referred to as a backup pipeline execution process. Without an interruption of the function pipeline process, data can be continuously output by executing the backup pipeline execution process.

Figs. 33 and 34 illustrate the backup pipeline execution process in detail. The backup pipeline execution process is described with reference to flowcharts of Figs. 33 and 34.

Referring to the flowchart of Fig. 33, number 1 in a circle is continued from a number 1 in circle of Fig. 29, and number 2 in a circle is continued from number 2 in a circle of Fig. 29. Referring to the flowchart of Fig. 34, number 3 in a circle is continued from number 3 in a circle of Fig. 29, and number 4 in a circle is continued from number 4 in a circle of Fig. 33.

The first phase of the backup pipeline execution process is identical to the same process flow of Fig. 29.

The discussion of the first phase of the backup pipeline execution process is thus omitted herein.

In the process flow of Fig. 29, the path 1 of "the process execution requesting apparatus 2 → the other information processing apparatus 3" is set. In step S3260, the next process data of one unit is transmitted from the process execution requesting apparatus 2 to the other information processing apparatus 3. In step S3340, the other information processing apparatus 3 receives the next process data of one unit and performs the process on the received data.

Upon completing a process step in step S3340 in the backup pipeline execution process, the other information processing apparatus 3 transmits a process end notice in step S3351 of Fig. 33.

The authorized path function pipeline controller 84 in the process execution requesting apparatus 2 receives the process end notice in step S3301, and transmits the next process data of one unit to the authorized path, namely, to the other information processing apparatus 3 in step S3311.

The other information processing apparatus 3 receives the next process data of one unit in step S3361, and performs the process thereof on the received data. Upon completing the process, the other information processing apparatus 3 transmits a process end notice in step S3371.

The authorized path function pipeline controller 84 in the process execution requesting apparatus 2 determines in step S3321 whether the process end notice has been transmitted within a predetermined period of time.

If the other information processing apparatus 3 performs the process thereof and transmits the process end notice to the authorized path function pipeline controller 84 in the process execution requesting apparatus 2 within a predetermined period of time in step S3371, the determination in step S3321 results in yes. Processing proceeds to step S3331.

Upon receiving the process end notice in step S3331, the authorized path function pipeline controller 84 in the process execution requesting apparatus 2 determines in step S3341 whether all data has been processed.

If it is determined in step S3341 that all data has been processed, the backup pipeline execution process of the process execution requesting apparatus 2 ends.

The other information processing apparatus 3 determines in step S3381 whether next process data has been transmitted. If the backup pipeline execution process of the process execution requesting apparatus 2 has been completed, no further process data is naturally transmitted. If it is thus determined in step S3381 that no further data has been transmitted, the backup pipeline execution process of the other information processing apparatus 3 ends.

If it is determined in step S3341 that all data has not been processed, processing returns to step S3311 to repeat step S3311 and subsequent steps. More specifically, next process data is transmitted to the other information processing apparatus 3. It is determined in step S3381 that the next process data has been transmitted, processing returns to step S3361 to repeat step S3361 and subsequent steps.

If the other information processing apparatus 3 has transmitted the process end notice within a predetermined period of time with no particular problem arising in the path 1 set as an authorized path, a process basically identical to the process flow of Fig. 30 is performed.

In contrast, if the other information processing apparatus 3 fails to transmit the process end notice within a predetermined period of time as a result of a problem arising in the path 1 set as an authorized path, the determination in step S3321 is no.

The authorized path function pipeline controller 84 notifies the authorized path setter 83 that no process end notice has been transmitted within a predetermined period of time. Processing proceeds to step S3351 of Fig. 34.

Upon receiving the process end notice in step S3351, the authorized path setter 83 in the process execution requesting apparatus 2 references the descriptive value of the time for arrival in the path selection table, thereby updating the authorized path to the next fastest path candidate.

In this case, only the path 2 of "the process execution requesting apparatus 2 having ID2 → the other information processing apparatus 4 having ID4" is stored as a backup path. The authorized path setter 83 thus updates the authorized path from the path 1 to the path in step S3351. In other words, the authorized path is reset to the path 2.

A plurality of backup paths are occasionally stored. In such a case, the authorized path setter 83 in the process execution requesting apparatus 2 compares of the descriptive values of the times for arrival of the plurality of backup paths in step S3351, and sets a backup path providing the shortest time, namely, the fastest backup path as an authorized path.

In a subsequent operation, a process basically identical to the process of Fig. 33 is performed except that the authorized path is shifted from the path 1 to the path 2.

The authorized path setter 83 notifies the authorized path function pipeline controller 84 of the results of step S3351, namely, the reset results of the authorized path. Processing proceeds to step S3361.

In step S3361, the authorized path function pipeline controller 84 transmits next process data of one unit to the path 2 as the authorized path, namely, to the other information processing apparatus 4.

In step S3441, the other information processing apparatus 4 receives the next process data of one unit and processes the received process data. Upon completing the process in step S3441, the other information processing apparatus 4 transmits a process end notice to the process execution requesting apparatus 2 in step S3442.

The authorized path function pipeline controller 84 in the process execution requesting apparatus 2 determines in step S3371 whether the process end notice has been transmitted within a predetermined period of time.

If the other information processing apparatus 4 has transmitted the process end notice to the process execution requesting apparatus 2 with in the predetermined period of time in step S3442, the determination in step S3371 results in yes. Processing proceeds to step S3381.

Upon receiving the process end notice in step S3381, the authorized path function pipeline controller 84 in the process execution requesting apparatus 2 determines in step S3391 whether all data has been processed.

If it is determined in step S3391 that all data has been processed, the backup pipeline execution process of the process execution requesting apparatus 2 ends.

In step S3443, the other information processing apparatus 4 determines whether next process data has been transmitted. If the process execution requesting apparatus 2 completes the backup pipeline execution process, no further process data has been naturally received. It is determined in step S3443 that no further process data has been transmitted, and the other information processing apparatus 4 ends the backup pipeline execution process thereof.

If it is determined in step S3391 that all data has not been processed, processing returns to step S3361 to repeat step S3361 and subsequent steps. More specifically, next process data is transmitted to the other information processing apparatus 4 in step S3361. If it is determined in step S3443 that the next process data has been transmitted, processing returns to step S3441 to repeat step S3441 and subsequent steps.

If the other information processing apparatus 4 has transmitted the process end notice within a predetermined period of time with no particular problem arising in the path 2 reset as an authorized path, a process basically identical to the process flow of Fig. 30, except that the authorized path changed from the path 1 to the path 2, is performed.

In contrast, if the other information processing apparatus 4 fails to transmit the process end notice within a predetermined period of time as a result of a problem arising in the path 2 reset as an authorized path, the determination in step S3371 is no. Processing proceeds to step S3401.

In this process, no other backup path is stored, and the authorized path function pipeline controller 84 in the process execution requesting apparatus 2 executes a predetermined error process in step S3401. All backup pipeline execution process including the process of the process execution requesting apparatus 2 then ends.

If at least one backup path is still stored at the moment the determination in step S3371 results in no, processing returns to step S3351. Another backup path is further reset as an authorized path, and the above series of process steps are performed. The function pipeline process using another backup path is further performed.

The first process flow of Figs. 29 and 30 and the second process flow of Figs. 33 and 34, as an actual example of the pipeline execution process in step S125 of Fig. 14, are described. The pipeline execution process is not limited to the first process flow and the second process flow, and may be performed in any of other variety of process flows.

The path that has resulted in the fastest speed can cause a delay due to a load on the network later. Two authorized paths can be concurrently used in the pipeline execution process (hereinafter referred to as a dual pipeline execution process) to continuously output data at the fastest speed.

The dual pipeline execution process is not limited to any particular method. The following methods can be used.

The path candidate setter 81 in the front-end information processing apparatus (process execution requesting apparatus) 2 of Fig. 15 performs the following process instead of the path candidate search process of Fig. 20 in step S203 of Fig. 18 of the path selection process in step S124 of Fig. 14. The path candidate setter 81 determines at least one first path candidate containing the front-end information processing apparatus 2 corresponding to the upper most node, and one of the other information processing apparatuses corresponding to the two branch nodes under the upper most node (hereinafter referred to a node A and a node B), and determines at least one second path candidate containing the front-end information processing apparatus 2 and the other of information processing apparatuses corresponding to the node A and the node B.

In a portion of the pipeline execution process in step S125 of Fig. 14, the path candidate function pipeline controller 82 in the front-end information processing apparatus 2 executes the function pipeline process using all at least one first path candidate and at least one second path candidate. The authorized path setter 83 sets, as an authorized path, the fastest path candidate from among at least one first path candidate, and sets, as an authorized path, the fastest path candidate from among at least one second path candidate.

The above-referenced method is used to determine the authorized path in the dual pipeline execution process.

The process data from the first authorized path and the second authorized path can be individually output to a predetermined destination (except the front-end information processing apparatus 2), and the fastest data can be selected at the destination. Alternatively, the process data from the first authorized path and the second authorized path is transmitted to the front-end information processing apparatus 2, and the front-end information processing apparatus 2 then outputs the process data that has arrived first.

As previously discussed with reference to the dual pipeline execution process, the path candidate search process in step S203 of Fig. 18 is not limited to the process flow of Fig. 20. A variety of processes can be used for the path candidate search process depending on the features of the pipeline execution process in step S125 of Fig. 14.

Data can be delayed among information processing apparatuses due to limitations in the band of the network. To reduce delay, the number of information processing apparatuses contained in the path needs to be minimized. A path candidate search process for limiting the depth of the tree can be used. The depth of the tree means the number of layers in the bifurcated tree.

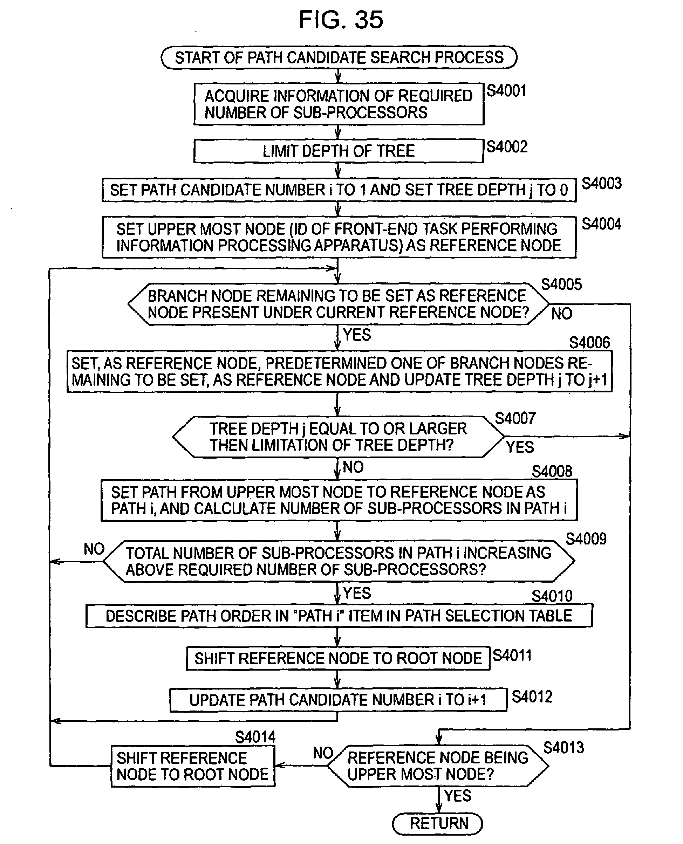

More specifically, a path candidate selection process limiting the depth of the tree of Fig. 3 can be used as shown in Fig. 35. Fig. 35 illustrates another process flow different from the path candidate search process of Fig. 20. The other path candidate search process is described below with reference to Fig. 35.

As the process flow of Fig. 20, the path candidate search process of Fig. 35 is also carried out by the path candidate setter 81 in the process execution requesting apparatus 2 of Fig. 15. For simplicity of explanation, it is assumed that the path candidate search process is carried by the process execution requesting apparatus 2.

In step S4001, the process execution requesting apparatus 2 acquires information relating to the required number of sub-processors.

In step S4002, the process execution requesting apparatus 2 sets a limit to the depth of the tree.

More specifically, the user may wish to limit the number of information processing apparatuses contained in the path of the function pipeline process to "R" ("R" is an integer not less than 1). In step S4002, the process execution requesting apparatus 2 sets the depth of the tree to "R".

In step S4003, the process execution requesting apparatus 2 sets a path candidate number "i" to 1 while also setting the depth of the tree "j" to zero.

In step S4004, the process execution requesting apparatus 2 sets the upper most node (ID of the front-end information processing apparatus 2) as a reference node.

In step S4005, the process execution requesting apparatus 2 determines whether a branch node remaining to be set as a reference node is present under the current reference node.

If it is determined in step S4005 that a branch node remaining to be set as a reference node is not present under the current reference node, in other words, if all nodes have been set as a reference node, processing proceeds to step S4013.

In step S4013, the process execution requesting apparatus 2 determines whether the reference node is the upper most node.

A loop process from step S4005 to step S4012 is repeated until all nodes of the bifurcated tree contained in the depth of the tree are set as reference nodes. When it is determined in step S4013 that the upper most node is a reference node, the path candidate search process of Fig. 35 ends.

If it is determined in step S4013 that the upper most node is not a reference node, processing proceeds to step S4014. In step S4014, the process execution requesting apparatus 2 sets the reference node to the root node. Processing returns to step S4005 to determine again whether a branch node remaining to be set as a reference node is present under the current reference node.

The process to be followed when the determination in step S4005 is no has been described.

If the determination in step S4005 is yes, in other words, if it is determined that a branch node remaining to be set as a reference node is present under the current reference node, processing proceeds to step S4006.

In step S4006, the process execution requesting apparatus 2 sets, as a reference node, a predetermined one of the branch nodes remaining to be set as a reference node, and updates the tree depth "j" to "j+1".

The process execution requesting apparatus 2 determines in step S4007 whether the tree depth "j" updated in step S4006 is equal to or greater than the tree depth set in step S4002.

If it is determined in step S4007 that the tree depth "j" is equal to or greater than the set tree depth, processing proceeds to step S4013.

If it is determined in step S4007 that the tree depth "j" is smaller than the set tree depth, processing proceeds to step S4008.

In step S4008, the process execution requesting apparatus 2 sets, as a path "i", the path from the upper most node to the reference node, and calculates the total number of sub-processors within the path "i".

The process execution requesting apparatus 2 determines in step S4009 whether the total number of sub-processors within the path "i" becomes equal to or greater than the required number of sub-processors.

If it is determined in step S4009 that the total number of sub-processors within the path "i" is less than the required number of sub-processors, process returns to step S4005 to repeat step S4005 and subsequent steps.

If it is determined in step S4009 that the total number of sub-processors within the path "i" becomes equal to or greater than the required number of sub-processors, processing proceeds to step S4010.

The process execution requesting apparatus 2 describes a path sequence in the item of the path "i" in the path selection table.

The process execution requesting apparatus 2 sets the reference node to the root node in step S4011, and updates a path candidate number "i" to "i+1" in step S4012. Processing returns to step S4005 to repeat step S4005 and subsequent steps.

The path candidate search process of Fig. 35 for limiting the tree depth is thus executed.

The information processing apparatuses 1 through N forming the information processing system of Fig. 1 perform the process thereof, such as the process illustrated in Fig. 14 if N=4, and provide the following first through third advantages.

In the first advantage, a plurality of information processing apparatuses perform the function pipeline process. The function pipeline process is thus performed using sub-processors more than the number of sub-processors available from a single information processing apparatus. In other words, in the execution of the function pipeline process, tasks more than tasks executable by a single information processing apparatus can be performed.

In the second advantage, a plurality of path candidates are prepared in the execution of the function pipeline process and the process results are always available from the fastest path.

In the third advantage, the path is multiplied and the backup paths are stored. If one path becomes inoperative, another path can be used to continue the function pipeline process without interruption.

The above-references series of steps can be performed by software.

If the series of steps is performed by software, a program forming the software is installed from a recording medium or via a network onto a computer incorporated into a hardware structure or to a general-purpose computer, for example.

As shown in Fig. 1, users may be supplied with the software program in the recording medium separate from the apparatus. As shown in Fig. 1, the recording media include the removable recording medium 18 (package media) including a magnetic disk (such a floppy disk®), an optical disk (such as a compact disk read-only memory (CD-ROM), and a digital versatile disk (DVD)), a magneto-optic disk (such as Mini-Disk (MD®)), and a semiconductor memory. The recording media further include the main memory 12, and a hard disk contained in the recorder 13, each storing the software program and supplied in the apparatus to the user.

The process steps discussed in this specification are sequentially performed in the time series order as stated. Alternatively, the steps may be performed in parallel or separately.

In this specification, the system refers to a system composed of a plurality of apparatuses.

It should be understood by those skilled in the art that various modifications, combinations, sub-combinations and alterations may occur depending on design requirements and other factors insofar as they are within the scope of the appended claims or the equivalents thereof.

The present invention contains subject matter related to Japanese Patent Application JP 2004-261295 filed in the Japanese Patent Office on September 8, 2004, the entire contents of which are incorporated herein by reference.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information processing system comprising at least three information processing apparatuses, in order to perform a function pipeline process in response to the inputting of data of each one unit so that processes of a plurality of functional blocks are successively performed on the data in a first sequence, setting a path in which each of at least two of information processing apparatuses is virtually arranged in a second sequence, performing first control for assigning a processor, available for each of the at least two of the information processing apparatuses contained in the path, at least one of the processes of the plurality of function blocks in accordance with the first sequence and the second sequence, and then performing second control for causing the data to successively pass through the path on a per unit basis, one of the at least three information processing apparatuses comprising:
candidate setting means for setting at least two path candidates based on the number of processors available for each one of the at least three information processing apparatuses;
first control means for performing the first control and the second control using individually the at least two path candidates set by the candidate setting means;
path setting means for setting, as the path from among the at least two path candidates set by the candidate setting means, a path candidate through which the data of one unit has passed the fastest through the second control of the first control means; and
second control means for performing the second control by using the path after the path is set by the path setting means.

2. An information processing method of an information processing system comprising at least three information processing apparatuses, in order to perform a function pipeline process in response to the inputting of data of each one unit so that processes of a plurality of functional blocks are successively performed on the data in a first sequence, setting a path in which each of at least two of information processing apparatuses is virtually arranged in a second sequence, performing first control for assigning a processor, available for each of the at least two of the information processing apparatuses contained in the path, at least one of the processes of the plurality of function blocks in accordance with the first sequence and the second sequence, and then performing second control for causing the data to successively pass through the path on a per unit basis, the method comprising steps of:
setting at least two path candidates based on the number of processors available for each one of the at least three information processing apparatuses;
performing the first control and the second control using individually the at least two set path candidates;
setting, as the path from among the at least two set path candidates, a path candidate through which the data of one unit has passed the fastest through the second control; and
performing the second control by using the path after the path is set.

3. One of at least three information processing apparatuses included in an information processing system, in order to perform a function pipeline process in response to the inputting of data of each one unit so that processes of a plurality of functional blocks are successively performed on the data in a first sequence, setting a path in which each of at least two of information processing apparatuses is virtually arranged in a second sequence, performing first control for assigning a processor, available for each of the at least two of the information processing apparatuses contained in the path, at least one of the processes of the plurality of function blocks in accordance with the first sequence and the second sequence, and then performing second control for causing the data to successively pass through the path on a per unit basis, the one of information processing apparatuses comprising:
candidate setting means for setting at least two path candidates based on the number of processors available for each one of the at least three information processing apparatuses;
first control means for performing the first control and the second control using individually the at least two path candidates set by the candidate setting means;
path setting means for setting, as the path from among the at least two path candidates set by the candidate setting means, a path candidate through which the data of one unit has passed the fastest through the second control of the first control means; and
second control means for performing the second control by using the path after the path is set by the path setting means.

4. The information processing apparatus according to claim 3, wherein the path setting means resets a path from among the at least two candidates not yet set as the path if a predetermined condition is satisfied, and
wherein the second control means performs the second control using the reset path after the path is reset by the path setting means.

5. An information processing method of one of at least three information processing apparatuses included in an information processing system, in order to perform a function pipeline process in response to the inputting of data of each one unit so that processes of a plurality of functional blocks are successively performed on the data in a first sequence, setting a path in which each of at least two of information processing apparatuses is virtually arranged in a second sequence, performing first control for assigning a processor, available for each of the at least two of the information processing apparatuses contained in the path, at least one of the processes of the plurality of function blocks in accordance with the first sequence and the second sequence, and then performing second control for causing the data to successively pass through the path on a per unit basis, the method comprising steps of:
setting at least two path candidates based on the number of processors available for each one of the at least three information processing apparatuses;
performing the first control and the second control using individually the at least two set path candidates;
setting, as the path from among the at least two set path candidates, a path candidate through which the data of one unit has passed the fastest through the second control; and
performing the second control by using the path after the path is set.

6. A computer program for causing a computer to perform an information processing method of one of at least three information processing apparatuses included in an information processing system, in order to perform a function pipeline process in response to the inputting of data of each one unit so that processes of a plurality of functional blocks are successively performed on the data in a first sequence, setting a path in which each of at least two of information processing apparatuses is virtually arranged in a second sequence, performing first control for assigning a processor, available for each of the at least two of the information processing apparatuses contained in the path, at least one of the processes of the plurality of function blocks in accordance with the first sequence and the second sequence, and then performing second control for causing the data to successively pass through the path on a per unit basis, the computer program comprising steps of:
setting at least two path candidates based on the number of processors available for each one of the at least three information processing apparatuses;
performing the first control and the second control using individually the at least two set path candidates;
setting, as the path from among the at least two set path candidates, a path candidate through which the data of one unit has passed the fastest through the second control; and
performing the second control by using the path after the path is set.

## Patentansprüche

1. Informationsverarbeitungssystem mit mindestens drei Informationsverarbeitungsgeräten, um einen Funktions-Pipeline-Prozess abhängig von dem Eingehen von Daten in jeder Einheit durchzuführen, so dass Prozesse von mehreren funktionalen Blöcken aufeinander folgend auf die Daten in einer ersten Sequenz ausgeführt werden, wobei ein Pfad festgelegt wird, in dem jedes der mindestens zwei Informationsverarbeitungsgeräte virtuell in einer zweiten Sequenz angeordnet wird, wobei eine erste Steuerung zum Zuordnen eines Prozessors, der für jede der mindestens zwei Informationsverarbeitungsgeräte, die in dem Pfad enthalten sind, verfügbar ist, zu mindestens einem der Prozesse der mehreren funktionalen Blöcke gemäß der ersten Sequenz und der zweiten Sequenz durchgeführt wird, und anschließend eine zweite Steuerung, um zu bewirken, dass die Daten aufeinander folgend durch den Pfad geleitet werden, auf einer Einheiten-Basis durchgeführt wird, wobei eines der mindestens drei Informationsverarbeitungsgeräte umfasst:
eine Kandidatenfestlegungseinrichtung zum Festlegen von mindestens zwei Pfadkandidaten abhängig von der Anzahl von für jeden der mindestens drei Informationsverarbeitungsgeräte verfügbaren Prozessoren;
eine erste Steuereinrichtung zum Durchführen der ersten Steuerung und der zweiten Steuerung, die individuell die mindestens zwei Pfadkandidaten, die durch die Kandidatenfestlegungseinrichtung festgelegt sind, verwenden;
eine Pfadfestlegungseinrichtung zum Festlegen als den Pfad aus den mindestens zwei Pfadkandidaten, die durch die Kandidatenfestlegungseinrichtung festgelegt sind, eines Pfadkandidaten, durch den die Daten einer Einheit am schnellsten durch die zweite Steuerung der ersten Steuereinrichtung geführt werden; und
eine zweite Steuereinrichtung zum Durchführen der zweiten Steuerung, indem der Pfad verwendet wird, nachdem der Pfad durch die Pfadfestlegungseinrichtung festgelegt ist.

2. Informationsverarbeitungsverfahren eines Informationsverarbeitungssystems mit mindestens drei Informationsverarbeitungsgeräten, um einen Funktions-Pipeline-Prozess abhängig von der Eingabe von Daten in jeder Einheit durchzuführen, so dass Prozesse von mehreren funktionalen Blöcken aufeinander folgend auf die Daten in einer ersten Sequenz ausgeführt werden, wobei ein Pfad festgelegt wird, in dem jede der mindestens zwei Informationsverarbeitungsgeräte virtuell in einer zweiten Sequenz angeordnet ist, wobei eine erste Steuerung zum Zuordnung eines Prozessors, der für jede der mindestens zwei der Informationsverarbeitungsgeräte, die in dem Pfad enthalten sind, verfügbar ist, auf mindestens einen der Prozesse der mehreren funktionalen Blöcke gemäß der ersten Sequenz und der zweiten Sequenz durchgeführt wird, und wobei anschließend die zweite Steuerung, um zu bewirken, dass Daten aufeinander folgend durch den Pfad auf einer Einheiten-Basis geleitet werden, durchgeführt wird, wobei das Verfahren folgende Schritte umfasst:
Festlegen von mindestens zwei Pfadkandidaten abhängig von der Anzahl der Prozessoren, die für jeden der mindestens drei Informationsverarbeitungsgeräte verfügbar sind;
Durchführen der ersten Steuerung und der zweiten Steuerung, die individuell die mindestens zwei festgelegten Pfadkandidaten verwenden;
Festlegen eines Pfadkandidaten, durch den die Daten einer Einheit am schnellsten durch die zweite Steuerung geleitet werden, als der Pfad aus den mindestens zwei festgelegten Pfadkandidaten; und
Durchführen einer zweiten Steuerung mit Hilfe des Pfades, nachdem der Pfad festgelegt worden ist.

3. Eines von mindestens drei Informationsverarbeitungsgeräten in einem Informationsverarbeitungssystem, um einen Funktions-Pipeline-Prozess abhängig von dem Eingang von Daten in jeder Einheit durchzuführen, so dass Prozesse von mehreren funktionalen Blöcken aufeinander folgend auf die Daten in einer ersten Sequenz ausgeführt werden, wobei ein Pfad festgelegt wird, in dem jedes von mindestens zwei Informationsverarbeitungsgeräte virtuell in einer zweiten Sequenz angeordnet wird, wobei eine erste Steuerung zum Zuordnen eines Prozessors, der für jedes der mindestens zwei Informationsverarbeitungsgeräte, die in dem Pfad enthalten sind, verfügbar ist, mindestens des Prozesses der mehreren funktionalen Blöcke gemäß der ersten Sequenz und der zweiten Sequenz durchgeführt wird, und anschließend eine zweiten Steuerung durchgeführt wird, um zu bewirken, dass die Daten aufeinander folgend durch den Pfad auf einer Einheiten-Basis geleitet werden, wobei das eine Informationsverarbeitungsgerät umfasst:
eine Kandidatenfestlegungseinrichtung zum Festlegen von mindestens zwei Pfadkandidaten abhängig von der Anzahl von den für die mindestens drei Informationsverarbeitungsgeräte verfügbaren Prozessoren;
eine erste Steuereinrichtung zum Durchführen der ersten Steuerung und der zweiten Steuerung, die individuell die mindestens zwei Pfadkandidaten, die durch die Kandidatenfestlegungseinrichtung festgelegt werden, verwenden; eine Pfadfestlegungseinrichtung zum Festelegen eines Pfadkandidaten, durch den die Daten der einen Einheit am schnellsten durch die zweite Steuerung der ersten Steuereinrichtung geleitet werden, als den Pfad aus den mindestens zwei Pfadkandidaten, die durch die Kandidatenfestlegungseinrichtung festgelegt sind; und
eine zweite Steuereinrichtung zum Durchführen der zweiten Steuerung mit Hilfe des Pfades, nachdem der Pfad durch die Pfadfestlegungseinrichtung festgelegt worden ist.

4. Informationsverarbeitungsgerät gemäß Anspruch 3, wobei die Pfadfestlegungseinrichtung einen Pfad aus den mindestens zwei Kandidaten, der noch nicht als der Pfad festgelegt worden ist, zurücksetzt, wenn eine vorbestimmte Bedingung erfüllt ist, und
wobei die zweite Steuereinrichtung die zweite Steuerung mit Hilfe des zurückgesetzten Pfades durchführt, nachdem der Pfad durch die Pfadfestlegungseinrichtung zurückgesetzt worden ist.

5. Informationsverarbeitungsverfahren von einer von mindestens drei Informationsverarbeitungsgeräten, die in einem Informationsverarbeitungssystem enthalten sind, um einen Funktions-Pipeline-Prozess abhängig von der Eingabe von Daten von jeder Einheit durchzuführen, so dass Prozesse von mehreren funktionalen Blöcken aufeinander folgend auf die Daten in einer ersten Sequenz durchgeführt werden, wobei ein Pfad, in dem jeder der mindestens zwei Informationsverarbeitungsgeräte virtuell in einer zweiten Abfolge angeordnet werden, festgelegt wird, wobei eine erste Steuerung zum Zuordnen eines Prozessors, der für jedes der mindestens zwei Informationsverarbeitungsgeräte, die in dem Pfad enthalten sind, verfügbar ist, zu mindestens dem Prozess der mehreren funktionalen Blöcke gemäß der ersten Sequenz und der zweiten Sequenz durchgeführt wird, und wobei anschließend eine zweite Steuerung durchgeführt wird, um zu bewirken, dass Daten aufeinander folgend durch den Pfad auf einer Einheiten-Basis geleitet werden, wobei das Verfahren die folgenden Schritte umfasst:
Festlegen von mindestens zwei Pfadkandidaten abhängig von der Anzahl von für eine der mindestens drei Informationsverarbeitungsgeräte verfügbaren Prozessoren;
Durchführen der ersten Steuerung und der zweiten Steuerung, die individuell die mindestens zwei festgelegten Pfadkandidaten verwenden;
Festlegen eines Pfadkandidaten, durch den die Daten einer Einheit am schnellsten durch die zweite Steuerung geleitet werden, als den Pfad aus den mindestens zwei festgelegten Pfadkandidaten; und
Durchführen der zweiten Steuerung mit Hilfe des Pfades, nachdem der Pfad festgelegt worden ist.

6. Computerprogramm zum Bewirken, dass ein Computer ein Informationsverarbeitungsverfahren für eines von mindestens drei Informationsverarbeitungsgeräten, die in einem Informationsverarbeitungssystem umfasst sind, durchführt, um einen Funktions-Pipeline-Prozess abhängig von der Eingabe von Daten in jede Einheit durchzuführen, so dass Prozesse von mehreren funktionalen Blöcken aufeinander folgend auf die Daten in einer ersten Sequenz ausgeführt werden, wobei ein Pfad, in dem mindestens zwei der Informationsverarbeitungsgeräte virtuell in einer zweiten Sequenz angeordnet werden, festgelegt wird, wobei eine erste Steuerung zum Zuordnen zu einem Prozessor, der für jedes der mindestens zwei Informationsverarbeitungsgeräte, die in dem Pfad enthalten sind, verfügbar ist, mindestens einer der Prozesse der mehreren funktionalen Blöcke gemäß der ersten Sequenz und der zweiten Sequenz durchgeführt wird, und wobei anschließend eine zweite Steuerung durchgeführt wird, um zu bewirken, dass die Daten aufeinander folgend durch den Pfad auf eine Einheiten-Basis geleitet werden, wobei das Computerprogramm die folgenden Schritte umfasst:
Festlegen von mindestens zwei Pfadkandidaten, abhängig von der Anzahl von Prozessoren, die für eines der mindestens drei Informationsverarbeitungsgeräte verfügbar sind;
Durchführen der ersten Steuerung und der zweiten Steuerung, die individuell die mindestens zwei festgelegten Pfadkandidaten verwenden;
Festlegen eines Pfadkandidaten, durch den die Daten einer Einheit am schnellsten durch die zweite Steuerung geleitet worden sind, als den Pfad aus den mindestens zwei festgelegten Pfadkandidaten; und
Durchführen der zweiten Steuerung mit Hilfe des Pfades, nachdem der Pfad festgelegt worden ist.

## Revendications

1. Système de traitement d'informations comprenant au moins trois dispositifs de traitement d'informations afin d'exécuter un traitement en pipeline de fonction en réponse à l'application en entrée de données de chaque une unité de sorte que les traitements d'une pluralité de blocs fonctionnels soient successivement exécutés sur les données dans une première séquence, en établissant un chemin dans lequel chaque dispositif parmi au moins deux des dispositifs de traitement d'informations est agencé virtuellement dans une seconde séquence, en exécutant une première commande pour charger un processeur, disponible pour chacun des au moins deux des dispositifs de traitement d'informations contenus dans le chemin, d'au moins l'un des traitements de la pluralité des blocs fonctionnels conformément à la première séquence et à la seconde séquence, et en exécutant ensuite une seconde commande pour amener les données à passer successivement au travers du chemin sur une base par unité, l'un des au moins trois dispositifs de traitement d'informations comprenant :
un moyen d'établissement de candidat destiné à établir au moins deux candidats chemins sur la base du nombre de processeurs disponibles pour chacun des au moins trois dispositifs de traitement d'informations,
un premier moyen de commande destiné à exécuter la première commande et la seconde commande en utilisant individuellement les au moins deux candidats chemins établis par le moyen d'établissement de candidat,
un moyen d'établissement de chemin, destiné à établir, en tant que le chemin parmi les au moins deux candidats chemins établis par le moyen d'établissement de candidat, un candidat chemin au travers duquel les données d'une unité sont passées le plus rapidement par le biais de la seconde commande du premier moyen de commande, et
un second moyen de commande destiné à exécuter la seconde commande en utilisant le chemin après que le chemin a été établi par le moyen d'établissement de chemin.

2. Procédé de traitement d'informations d'un système de traitement d'informations comprenant au moins trois dispositifs de traitement d'informations afin d'exécuter un traitement en pipeline de fonction en réponse à l'application en entrée de données de chaque une unité de sorte que les traitements d'une pluralité de blocs fonctionnels soient successivement exécutés sur les données dans une première séquence, en établissant un chemin dans lequel chacun des au moins deux dispositifs de traitement d'informations est agencé virtuellement dans une seconde séquence, en exécutant une première commande pour charger un processeur, disponible pour chacun des au moins deux des dispositifs de traitement d'informations contenus dans le chemin, d'au moins l'un des traitements de la pluralité des blocs fonctionnels conformément à la première séquence et à la seconde séquence, et en exécutant ensuite la seconde commande pour amener les données à passer successivement au travers du chemin sur une base par unité, le procédé comprenant les étapes consistant à :
établir au moins deux candidats chemins sur la base du nombre de processeurs disponibles pour chacun des au moins trois dispositifs de traitement d'informations,
exécuter la première commande et la seconde commande en utilisant individuellement les au moins deux candidats chemins établis,
établir, en tant que le chemin parmi les au moins deux candidats chemins établis, un candidat chemin au travers duquel les données d'une unité sont passées le plus rapidement au travers de la seconde commande, et
exécuter la seconde commande en utilisant le chemin après que le chemin a été établi.

3. Un des au moins trois dispositifs de traitement d'informations compris dans un système de traitement d'informations, afin d'exécuter un traitement en pipeline de fonction en réponse à l'application en entrée de données de chaque une unité de sorte que les traitements d'une pluralité de blocs fonctionnels soient successivement exécutés sur les données dans une première séquence, en établissant un chemin dans lequel chacun des au moins deux des dispositifs de traitement d'informations est agencé virtuellement dans une seconde séquence, en exécutant une première commande pour charger un processeur, disponible pour chacun des au moins deux des dispositifs de traitement d'informations contenus dans le chemin, d'au moins l'un des traitements de la pluralité de blocs fonctionnels conformément à la première séquence et à la seconde séquence, et en exécutant ensuite une seconde commande pour amener les données à passer successivement au travers du chemin sur une base par unité, le un dispositif parmi les dispositifs de traitement d'informations comprenant :
un moyen d'établissement de candidat destinés à établir au moins deux candidats chemins sur la base du nombre de processeurs disponibles pour chacun des au moins trois dispositifs de traitement d'informations,
un premier moyen de commande destiné à exécuter la première commande et la seconde commande en utilisant individuellement les au moins deux candidats chemins établis par le moyen d'établissement de candidat,
un moyen d'établissement de chemin, destiné à établir, en tant que le chemin parmi les au moins deux candidats chemins établis par le moyen d'établissement de candidat, un candidat chemin au travers duquel les données d'une unité sont passées le plus rapidement au travers de la seconde commande du premier moyen de commande, et
un second moyen de commande destiné à exécuter la seconde commande en utilisant le chemin après que le chemin a été établi par le moyen d'établissement de chemin.

4. Dispositif de traitement d'informations selon la revendication 3, dans lequel le moyen d'établissement de chemin réinitialise un chemin parmi les au moins deux candidats non encore établis en tant que le chemin si une condition prédéterminée est satisfaite, et
dans lequel le second moyen de commande exécute la seconde commande en utilisant le chemin réinitialisé après que le chemin a été réinitialisé par le moyen d'établissement de chemin.

5. Procédé de traitement d'informations d'un dispositif parmi au moins trois dispositifs de traitement d'informations compris dans un système de traitement d'informations, afin d'exécuter un traitement en pipeline de fonction en réponse à l'application en entrée de données de chaque une unité de sorte que les traitements d'une pluralité de blocs fonctionnels soient successivement exécutés sur les données dans une première séquence, en établissant un chemin dans lequel chacun des au moins deux des dispositifs de traitement d'informations est agencé virtuellement dans une seconde séquence, en exécutant une première commande pour charger un processeur, disponible pour chacun des au moins deux des dispositifs de traitement d'informations contenus dans le chemin, d'au moins l'un des traitements de la pluralité des blocs fonctionnels conformément à la première séquence et à la seconde séquence, et en exécutant ensuite la seconde commande pour amener les données à passer successivement au travers du chemin sur une base par unité, le procédé comprenant les étapes consistant à :
établir au moins deux candidats chemins sur la base du nombre de processeurs disponibles pour chacun des au moins trois dispositifs de traitement d'informations,
exécuter la première commande et la seconde commande en utilisant individuellement les au moins deux candidats chemins établis,
établir, en tant que le chemin parmi les au moins deux candidats chemins établis, un candidat chemin au travers duquel les données d'une unité sont passées le plus rapidement au travers de la seconde commande, et
exécuter la seconde commande en utilisant le chemin après que le chemin a été établi.

6. Programme informatique destiné à amener un ordinateur à exécuter un procédé de traitement d'informations d'un d'au moins trois dispositifs de traitement d'informations compris dans un système de traitement d'informations, afin d'exécuter un traitement en pipeline de fonction en réponse à l'application en entrée de données de chaque une unité de sorte que les traitements d'une pluralité de blocs fonctionnels soient successivement exécutés sur les données dans une première séquence, en établissant un chemin dans lequel chacun des au moins deux dispositifs de traitement d'informations est agencé virtuellement dans une seconde séquence, en exécutant une première commande pour charger un processeur, disponible pour chacun des au moins deux des dispositifs de traitement d'informations contenus dans le chemin, d'au moins l'un des traitements de la pluralité de blocs fonctionnels conformément à la première séquence et à la seconde séquence, et en exécutant ensuite la seconde commande pour amener les données à passer successivement au travers du chemin sur une base par unité, le programme informatique comprenant les étapes consistant à :
établir au moins deux candidats chemins sur la base du nombre de processeurs disponibles pour chacun des au moins trois dispositifs de traitement d'informations,
exécuter la première commande et la seconde commande en utilisant individuellement les au moins deux candidats chemins établis,
établir, en tant que le chemin parmi les au moins deux candidats chemins établis, un candidat chemin au travers duquel les données d'une unité sont passées le plus rapidement au travers de la seconde commande, et
exécuter la seconde commande en utilisant le chemin après que le chemin est établi.
